(19) Europäisches Patentamt
European Patent Office
Office européen des brevets

(11) **EP 4 213 572 B1**

(12) **EUROPEAN PATENT SPECIFICATION**

(45) Date of publication and mention
of the grant of the patent:
**02.10.2024 Bulletin 2024/40**

(21) Application number: **22212354.9**

(22) Date of filing: **08.12.2022**

(51) International Patent Classification (IPC):
***H04W 72/23*** *(2023.01)*

(52) Cooperative Patent Classification (CPC):
**H04W 72/23**

(54) **TECHNIQUE FOR SCHEDULING DOWNLINK DATA ALLOCATIONS AND UPLINK DATA ALLOCATIONS IN A WIRELESS NETWORK**

VERFAHREN ZUR PLANUNG VON DOWNLINK-DATENZUWEISUNGEN UND UPLINK-DATENZUWEISUNGEN IN EINEM DRAHTLOSEN NETZWERK

TECHNIQUE DE PLANIFICATION D'ATTRIBUTIONS DE DONNÉES DE LIAISON DESCENDANTE ET D'ATTRIBUTIONS DE DONNÉES DE LIAISON MONTANTE DANS UN RÉSEAU SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.01.2022 GB 202200532**

(43) Date of publication of application:
**19.07.2023 Bulletin 2023/29**

(73) Proprietor: **Airspan IP Holdco LLC**
**Boca Raton, FL 33431 (US)**

(72) Inventors:
• **LOGOTHETIS, Andrew**
**High Wycombe, HP10 8DN (GB)**
• **CHEN, Jiangling**
**Ruislip, HA4 9TP (GB)**
• **SARAO, Honey Kanwar Singh**
**Slough, SL1 6AU (GB)**
• **PERSAUD, Marlon Peter**
**Beaconsfield, HP9 1JJ (GB)**

(74) Representative: **D Young & Co LLP**
**3 Noble Street**
**London EC2V 7BQ (GB)**

(56) References cited:
WO-A1-2021/231522     WO-A1-2021/253207
US-A1- 2017 318 565     US-A1- 2020 106 549

**Description**

BACKGROUND

The present technique relates to the field of wireless communication.

A wireless communications network may include one or more base stations and one or more terminals. The one or more base stations may be part of a network of interconnected base stations, allowing the terminals to connect to a communications network (e.g. such as a mobile data (e.g. cellular) network), and each base station may communicate with (e.g. transmit downlink data to and receive uplink data from) the one or more terminals via wireless communication, employing a standard such as 5G NR, LTE, or any other wireless communication Standard. In a particular example of a wireless communications network, the terminals could be installed in moving vehicles such as aircraft.

A single base station may communicate with a plurality of terminals at any given time (e.g. a one-to-many arrangement), by adopting a suitable technology such as multiple-input-multiple-output (MIMO) technology where multiple antennas are used to support the transmitting and receiving of multiple data signals simultaneously over the same wireless communication resources. In addition, it is often the case that multiple base stations may be deployed in order to provide coverage for a larger area.

A base station may communicate with terminals on one or more beams; for example, the base station may generate a number of transmission beams to transmit data (referred to as "downlink" data) to the terminals, and may generate one or more reception beams on which data (referred to as "uplink" data) may be received from the terminals. These beams are typically directional, and may also be fairly narrow. Whilst this can improve performance, for example by increasing range and reducing interference, it may mean that the base station can only communicate with a subset of the terminals using a given beam. Moreover, the number of beams that can be employed at any given time may also be limited, for example due to regulatory and/or hardware limitations, which can further limit the number of terminals with which the base station can communicate at a given point in time.

Communication between the base station and the terminals may be performed in a scheduled manner. For example, transmission and reception of uplink data and downlink data may be performed within predetermined time slots that include downlink time slots (also referred to herein as transmission time slots) dedicated to transmission of downlink data and uplink time slots (also referred to herein as reception time slots) dedicated to reception of uplink data. Accordingly, the base station may perform scheduling processes to determine how to allocate between the terminals the available wireless communication resources for communication between the base station and the terminals. The need for an efficient scheduling technique may become even greater if the available resources are limited and/or if the number or terminals is large.

The scheduling processes may allocate wireless communication resources for use during both uplink and downlink communication - e.g. wireless communication resources to be used by the base station to transmit downlink data (downlink resources) and wireless communication resources to be used by the terminals to transmit uplink data (uplink resources). Thus, there may be a need to inform the terminals of the uplink resources they have been allocated. However, the base station may be arranged to transmit this uplink resource information as part of the downlink data, using the downlink resources allocated for downlink communication. This can, potentially, limit which terminals can receive the uplink resource information in a given downlink time slot, which in turn may limit which terminals can be allocated uplink resources. This can lead to an unfair distribution of uplink resource:

Prior art documents relating to the field of resource allocation are:

> US 2020/106549 A1 (BAGHERI HOSSEIN [US] ET AL) 2 April 2020
> US 2017/318565 A1 (GOLITSCHEK EDLER VON ELBWART ALEXANDER [DE] ET AL) 2 November 2017
> WO 2021/231522 A1 (YI YUNJUNG [US]; DINAN ESMAEL HEJAZI [US] ET AL.) 18 November 2021
> WO 2021/253207 A1 (QUALCOMM INC [US]; CHEN BO [CN] ET AL.) 23 December 2021.

SUMMARY

In one example of the present technique, there is provided a base station for wireless communication with a plurality of terminals, comprising: wireless communication circuitry configured, during transmission time slots allocated for transmission, to transmit downlink data for reception by one or more of the terminals, and further configured, during reception time slots allocated for reception, to receive uplink data transmitted by one or more of the terminals; downlink scheduling circuitry configured to determine, for each transmission time slot, one or more downlink data allocations, each downlink data allocation identifying a terminal to which downlink data is to be transmitted, and wireless communication resources to be used by the wireless communication circuitry during the transmission time slot to transmit the downlink data to the identified terminal; uplink scheduling circuitry configured to operate ahead of the downlink scheduling circuitry to determine a candidate list of uplink data allocations identifying, for one or more reception time slots subsequent to a current transmission time slot being considered by the downlink scheduling circuitry, terminals which may be allocated to transmit uplink data within the one or more reception time slots and, for each identified terminal, the wireless communication resources to be used for that identified terminal; and control information generation circuitry to generate, for transmission in a given transmission time slot, downlink control information identifying one or more downlink data allocations, and uplink control information identifying one or more uplink data allocations selected from the candidate list, wherein the control information generation circuitry is arranged to select each uplink data allocation from the candidate list so as to seek to ensure that the terminal associated with each selected uplink data allocation will be able to receive the uplink control information, given the wireless communication resources to be employed by the wireless communication circuitry during the given transmission time slot.

In another example of the present technique, there is provided a method of operating a base station for wireless communication with a plurality of terminals, comprising: during transmission time slots allocated for transmission, transmitting downlink data for reception by one or more of the terminals; during reception time slots allocated for reception, receiving uplink data transmitted by one or more of the terminals; determining for each transmission time slot, using downlink scheduling circuitry, one or more downlink data allocations, each downlink data allocation identifying a terminal to which downlink data is to be transmitted, and wireless communication resources to be used during the transmission time slot to transmit the downlink data to the identified terminal; determining, using uplink scheduling circuitry operating ahead of the downlink scheduling circuitry, a candidate list of uplink data allocations identifying, for one or more reception time slots subsequent to a current transmission time slot being considered by the downlink scheduling circuitry, terminals which may be allocated to transmit uplink data within the one or more reception time slots and, for each identified terminal, the wireless communication resources to be used for that identified terminal; and generating, for transmission in a given transmission time slot, downlink control information identifying one or more downlink data allocations, and uplink control information identifying one or more uplink data allocations selected from the candidate list, wherein each uplink data allocation is selected from the candidate list so as to seek to ensure that the terminal associated with each selected uplink data allocation will be able to receive the uplink control information, given the wireless communication resources to be employed during the given transmission time slot.

In a still further example of the present technique, there is provided a base station for wireless communication with a plurality of terminals, comprising: wireless communication means for transmitting, during transmission time slots allocated for transmission, downlink data for reception by one or more of the terminals, and further for receiving, during reception time slots allocated for reception, uplink data transmitted by one or more of the terminals; downlink scheduling means for determining, for each transmission time slot, one or more downlink data allocations, each downlink data allocation identifying a terminal to which downlink data is to be transmitted, and wireless communication resources to be used by the wireless communication means during the transmission time slot to transmit the downlink data to the identified terminal; uplink scheduling means for operating ahead of the downlink scheduling means and for determining a candidate list of uplink data allocations identifying, for one or more reception time slots subsequent to a current transmission time slot being considered by the downlink scheduling means, terminals which may be allocated to transmit uplink data within the one or more reception time slots and, for each identified terminal, the wireless communication resources to be used for that identified terminal; and control information generation means for generating, for transmission in a given transmission time slot, downlink control information identifying one or more downlink data allocations, and uplink control information identifying one or more uplink data allocations selected from the candidate list, wherein the control information generation means is arranged to select each uplink data allocation from the candidate list so as to seek to ensure that the terminal associated with each selected uplink data allocation will be able to receive the uplink control information, given the wireless communication resources to be employed by the wireless communication means during the given transmission time slot.

BRIEF DESCRIPTION OF THE DRAWINGS

The present technique will be described further, by way of illustration only, with reference to examples thereof as illustrated in the accompanying drawings, in which:

Figure 1 is a block diagram schematically illustrating components provided within a base station in accordance with one example implementation;
Figure 2 is a diagram illustrating a communication frame employed in wireless communication, in accordance with one example implementation;
Figure 3 illustrates communication between a base station and multiple aircraft using multiple beams, in accordance with one example implementation;
Figure 4 is a flow diagram illustrating steps performed by uplink scheduling circuitry in accordance with one example implementation;
Figure 5 is a flow diagram illustrating a technique employed in one example implementation in order to perform both downlink and uplink scheduling, and the transmission of associated downlink and uplink control information, in accordance with one example implementation;
Figure 6 is a flow diagram illustrating in more detail steps performed in one example implementation in order to determine the uplink control information;
Figures 7 and 8 are timing diagrams for two alternative implementations of the proposed technique;

Figure 9 is a graph of uplink resource allocations versus time when adopting an implementation in accordance with the techniques described herein;

Figures 10 and 11 illustrate beam patterns that may be used for reception time slots and transmission time slots, respectively, in accordance with one particular example implementation;

Figure 12 illustrates the transmission time slot beam patterns of Figure 11, but with an indication added of uplink control information that may be transmitted using the beams of each transmission time slot to identify to terminals the uplink data allocations that have been scheduled for them, in accordance with one specific example implementation; and

Figure 13 illustrates the uplink and downlink schedules that may be computed in accordance with the specific example implementation shown in Figures 10 and 11.

DESCRIPTION OF EXAMPLES

Before discussing example implementations with reference to the accompanying figures, the following description of example implementations and associated advantages is provided.

In accordance with one example configuration, there is provided a base station for wireless communication with a plurality of terminals (e.g. items of user equipment). The base station comprises wireless communication circuitry configured, during transmission time slots allocated for transmission, to transmit downlink data for reception by one or more of the terminals, and further configured, during reception time slots allocated for reception, to receive uplink data transmitted by one or more of the terminals. For example, the wireless communication circuitry may be constrained to only transmit data during transmission time slots, so that it is available to receive uplink data at other times (e.g. during reception time slots).

The base station also comprises downlink scheduling circuitry configured to determine, for each transmission time slot, one or more downlink data allocations, each downlink data allocation identifying a terminal to which downlink data is to be transmitted, and wireless communication resources to be used by the wireless communication circuitry during the transmission time slot to transmit the downlink data to the identified terminal. The downlink scheduling circuitry may operate a number of time slots ahead of the time slot being handled by the wireless communication circuitry so that all of the required information needed in association with a given time slot can be computed before that given time slot is handled by the wireless communication circuitry.

The wireless communication resources to be used in any particular time slot can be specified in a variety of ways, and may for example include an identification of a beam to be used, one or more resource blocks or resource block groups to be used, a modulation and coding scheme to be used, a transmit power to be used, etc.

The base station additionally comprises uplink scheduling circuitry configured to operate ahead of the downlink scheduling circuitry to determine a candidate list of uplink data allocations identifying, for one or more reception time slots subsequent to a current transmission time slot being considered by the downlink scheduling circuitry, terminals which may be allocated to transmit uplink data within the one or more reception time slots and, for each identified terminal, the wireless communication resources to be used for that identified terminal. The uplink scheduling circuitry may be separate from the downlink scheduling circuitry, or the uplink and downlink scheduling processes performed by those entities may be separate processes running on the same circuitry. Since the uplink scheduling circuitry operates ahead of the downlink scheduling circuitry, the candidate list of uplink data allocations is not constrained by any scheduling decisions that may be made by the downlink scheduling circuitry, but instead provides a candidate pool of uplink data allocations that can seek to be used.

As noted earlier, whether a particular uplink data allocation can actually be used will be dependent on whether it is possible to notify the terminal associated with that particular uplink data allocation that it has been allocated that particular uplink data allocation, and such notification needs to occur by transmission of associated uplink control information within a transmission time slot occurring before the reception time slot associated with that particular uplink data allocation.

In accordance with the techniques described herein, control information generation circuitry is arranged to generate, for transmission in a given transmission time slot, downlink control information and uplink control information. In this application, "downlink control information" (DCI) comprises information generated by the control information generation circuitry of the base station, which identifies one or more downlink data allocations, and "uplink control information" (UCI) comprises information generated by the control information generation circuitry of the base station, which identifies one or more uplink data allocations selected from the candidate list. The control information generation circuitry is arranged to select each uplink data allocation from the candidate list so as to seek to ensure that the terminal associated with each selected uplink data allocation will be able to receive the uplink control information, given the wireless communication resources to be employed by the wireless communication circuitry during the given transmission time slot.

Since the uplink scheduling circuitry is operating ahead of the downlink scheduling circuitry, and determines a candidate list of uplink data allocations, then for any given transmission time slot being considered by the control information generation circuitry, it has been found that the above technique provides significantly improved flexibility when seeking to utilise the uplink data allocations determined by the uplink scheduling circuitry.

In particular, prior to the present technique it would typically have been considered appropriate to determine the downlink data allocations for a given transmission time slot and then cause the uplink scheduling circuitry to perform an uplink scheduling operation in order to seek to identify suitable uplink data allocations that can be communicated in that given transmission time slot, constrained by knowledge of the wireless communication resources (for example the beam) identified for each downlink data allocation for that given transmission time slot. However, the inventors of the present technique realised that such an approach can in some instances lead to significant distortion in the amount of uplink data allocations provided for each of the terminals, even for example if the uplink scheduling circuitry itself is applying an algorithm that seeks to share uplink data allocations uniformly amongst the terminals. In particular, since the uplink scheduling circuitry in accordance with such a prior art technique would perform the uplink scheduling operation separately for each given transmission time slot, it has been found that in some instances a particular terminal could be systematically starved of uplink resources, due to the fact that in the vast majority of instances where that particular terminal was selected by the uplink scheduling circuitry, there were no suitable wireless communication resources available in the given transmission time slot to notify that particular terminal of its uplink data allocation, and hence that uplink data allocation would not be utilised.

In accordance with the present technique this problem is alleviated, since the uplink scheduling circuitry is not constrained to perform it scheduling operation once per transmission time slot, nor is it constrained by the downlink data allocations that are determined for any particular transmission time slot. Instead, the control information generation circuitry can reference the same candidate list of uplink data allocations when considering each of multiple given transmission time slots, hence improving the likelihood that one of those given transmission time slots will have suitable wireless communication resources allocated for it to allow an uplink data allocation in the candidate list to be notified to the relevant terminal by the provision of corresponding uplink control information in that given transmission time slot.

In one example implementation, the base station further comprises antenna circuitry that is operated by the wireless communication circuitry to provide beams selected from a set of available beams and, for each terminal identified by a data allocation, the wireless communication resources indicated by that data allocation comprise at least a selected beam to be used for communication with the identified terminal.

The beams can take a variety of forms, but in one example implementation the beams in the set of beams are directional beams, and for any particular selected beam the terminals able to use that selected beam will be dependent on locations of those terminals. Whilst the directional beams can take a variety of different forms, they will often be relatively narrow beams, as the use of narrow beams can reduce the likelihood of interference with other beams being used, and can also provide other benefits, such as increasing range of transmission.

However, it should be noted that there could be situations where wider beams are used within one or more time slots, at least during certain periods of time. For example, if a particular terminal has not yet reported a preferred narrow beam to be used, the base station may seek to communicate with that particular terminal using a wider beam, for example to assist in establishing an initial connection to that terminal. In due course, once the terminal has established a connection to the base station, the terminal may for example, if instructed, indicate a preferred narrow beam to use, with that narrow beam then being used thereafter for communication between the base station and that particular terminal.

In one example implementation, the base station may be constrained to not exceed a defined maximum number of beams in any given transmission time slot. For example, regulatory constraints may be imposed on systems that limit the number of beams and/or the width of beams that can be used during downlink communication from the base station, and in some instances there may additionally be some hardware constraints that also limit the beams used for downlink communication. With regard to uplink communication, it is often the case that regulatory authorities do not place any limitations on the uplink beams used, but there could still be hardware limitations that constrain the number of beams and/or the width of the beams used for uplink communication.

The frequency with which beams can be changed may vary dependent on implementation, but in one example implementation the wireless communication circuitry is able to change the selected beams between each transmission time slot and between each reception time slot, and hence the beams used may change on time slot boundaries.

In one example implementation, the wireless communication resources to be employed by the wireless communication circuitry during the given transmission time slot are the wireless communication resources used for each downlink data allocation determined for that transmission time slot.

Whilst if desired, the downlink data allocations identified by the downlink control information transmitted in the given transmission time slot could be the downlink data allocations to be used for a transmission time slot subsequent to the given transmission time slot, in one example implementation the one or more downlink data allocations identified by the downlink control information transmitted in the given transmission time slot comprise each downlink data allocation for that given transmission time slot. Hence, the downlink data allocations in that example implementation apply to the given transmission time slot in which those downlink data allocations are identified by the downlink control information. In contrast, the one or more uplink data allocations identified by the uplink control information will, in one example implementation, relate to one or more future reception time slots occurring subsequent to the given transmission time slot. Hence, the uplink data allocations are reported in advance, allowing the associated terminals to make preparations to use those uplink data allocations in due course during the relevant reception time slot.

In one example implementation, the transmission time slots and reception time slots are organised into frames, each frame comprising multiple transmission time slots and one or more reception time slots. It is typically the case that wireless communications are downlink centric, which means that more data is transmitted in the downlink direction than in the uplink direction. To accommodate downlink centric communications systems more transmission/downlink slots are usually provided in a frame than reception/uplink slots. However, in one example implementation, there will still be multiple reception time slots in each frame even though there will be more transmission time slots in each frame.

In one example implementation, the uplink scheduling circuitry is arranged to compute the candidate list of uplink data allocations for each reception time slot of a given frame ahead of the downlink scheduling circuitry computing the downlink data allocations for any transmission time slot of the given frame. Hence, in such an example implementation, the candidate list of uplink data allocations can be computed once per frame, and then referred to by the control information generation circuitry when considering each transmission time slot within that frame.

In one example implementation, the uplink scheduling circuitry may be arranged to compute the candidate list of uplink data allocations sequentially for each reception time slot of the given frame, but alternatively could be arranged to compute the candidate list of uplink data allocations for all reception time slots of the given frame in parallel.

In one example implementation, the downlink scheduling circuitry is arranged to perform a separate scheduling operation for each transmission time slot of the frame in order to determine the one or more downlink data allocations for that transmission time slot. Hence, in one example implementation it can be seen that the downlink scheduling circuitry performs a downlink scheduling operation separately for each transmission time slot. However, in contrast the uplink scheduling circuitry can be arranged to compute the candidate list of uplink data allocations once per frame, such that the candidate list of uplink data allocations for each reception time slot is recomputed for each frame.

The manner in which the frame is organised to provide the required transmission time slots and reception time slots can vary dependent on implementation, but in one example implementation each frame comprises a sequence of transmission time slots preceding a sequence of reception time slots. In one particular example implementation, there may be a reserved/special slot that separates the sequence of transmission time slots from the subsequent sequence of reception time slots, this allowing time for the base station and the terminals (items of user equipment) to reconfigure their operation from transmission to reception.

In one example implementation, the downlink scheduling circuitry is arranged to employ a downlink scheduling algorithm aimed at sharing the downlink data allocations amongst the plurality of terminals in a defined way. Similarly, the uplink scheduling circuitry may be arranged to employ an uplink scheduling algorithm aimed at sharing the uplink data allocations amongst the plurality of terminals in a defined way. The defined way in which the allocations are to be shared can vary dependent on implementation, but in one example implementation the scheduling algorithms are chosen so as to seek to spread the allocations equally amongst the terminals. In one particular example implementation, each of the downlink scheduling circuitry and the uplink scheduling circuitry is arranged to employ a proportional-fair scheduling (PFS) algorithm.

As mentioned earlier, the wireless communication resources can take a variety of forms, but in one example implementation will identify at least one or more beams to be used for communication. The control information generation circuitry may then be arranged, for each downlink data allocation determined by the downlink scheduling circuitry for the given transmission time slot, to identify the beam specified by the wireless communication resources of that downlink data allocation, to select, if available, one or more uplink data allocations in the candidate list that also employ the beam identified for that downlink data allocation, and to generate the uplink control information for transmission in the given transmission time slot so as to identify each selected uplink data allocation. As noted earlier, since the candidate list is generated ahead of the actions of the downlink scheduling circuitry in respect of a particular frame, and the operation of the uplink scheduling circuitry is unconstrained by the decisions made by the downlink scheduling circuitry for any particular transmission time slot, the candidate list can provide an enhanced pool of potential uplink data allocations that can be referred to by the control information generation circuitry multiple times, as it processes each given transmission time slot within the frame, and this can significantly improve the likelihood that suitable wireless communication resources used in one of the transmission time slots of the frame can be identified for communicating uplink control information to the terminals associated with the uplink data allocations in the candidate list. This in turn can significantly improve the likelihood that the uplink data allocations will be spread amongst the terminals in the manner intended by the scheduling algorithm used by the uplink scheduling circuitry.

In one example implementation, once an uplink data allocation has been selected form the candidate list, that uplink data allocation is prevented from reselection. This avoids reselection of an uplink data allocation for which a suitable transmission time slot in which to transmit the associated uplink control information has already been identified.

In one example implementation, the control information generation circuitry is arranged to constrain the uplink data allocations selected from the candidate list so that the uplink control information generated for transmission in the given transmission time slot identifies no more than one uplink data allocation for any given terminal. This avoids any given terminal (item of UE equipment) from spending too much time seeking to decode control information blocks. Each terminal does not typically know in advance how long (e.g. in terms of resource blocks and OFDM symbols) the control information is, nor does it know where exactly to look in the control allocation region, so typically must perform a series of blind decodes to seek to detect the control information.

The techniques described herein can be used in a wide variety of different wireless communication systems, but in one example implementation, the base station is arranged for deployment in an air-to-ground (ATG) system, and each of the plurality of terminals are deployed in an aircraft.

Particular example implementations will now be described with reference to the figures.

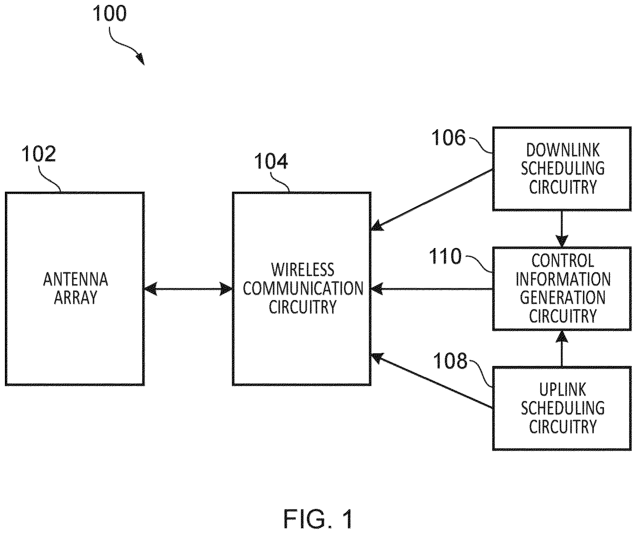

Figure 1 schematically illustrates a base station 100 configured for wireless communication with a plurality of terminals (not shown). The base station 100 includes an antenna array 102, which is arranged to generate a plurality of beams to transmit and receive signals from the plurality of terminals, under the control of wireless communication circuitry 104. In particular, the wireless communication circuitry 104 controls the antenna array 102 to transmit information (referred to as downlink information) to the plurality of terminals on one or more transmission beams, and to receive information (referred to as uplink information) transmitted by the plurality of terminals on one or more reception beams.

The transmission beams and reception beams are directional, so that they are only visible to terminals in a given direction (e.g. within a given angular range, the width of the range being dependent on how broad the beam is) - e.g. a transmission beam is considered to be "visible" to a given terminal if data transmitted using the transmission beam can be received by the terminal's antenna circuitry, and a reception beam is considered to be "visible" to the given terminal if the base station can receive data, transmitted by the terminal, on the reception beam. The number of beams which can be used at any given time by the antenna array may be limited based on hardware constraints associated with the specific circuitry of the base station 100, and/or due to certain regulatory constraints - for example, some jurisdictions may require that the number of transmission beams (downlink beams) in operation at any given time be limited to a certain number. In some cases, regulatory constraints may limit the number of beams further (e.g. to a lower number) than the hardware constraints.

The antenna array 102 is made up of a plurality of antenna elements, and the base station 100 may further comprise beamforming circuitry (not shown) to generate the one or more reception and transmission beams, and beam steering circuitry (not shown) to steer (e.g. rotate) the beams.

As will be discussed in more detail below, the wireless communication circuitry 104 controls the antenna array 102 to communicate with the plurality of terminals in predetermined time slots. In particular, the antenna array transmits downlink data to the one or more terminals in transmission time slots (also referred to as downlink slots or transmission slots) and does not transmit data during reception time slots (also referred to as uplink slots or reception slots), which are instead reserved for reception of information transmitted by the one or more terminals.

Accordingly, since both the number of beams that can operate at a given time and the time slots during which the base station can transmit or receive information are limited, there is a need to determine a schedule for when each of the plurality of terminals will transmit and receive data, and to determine the wireless communication resources (e.g. including which beam) to be employed for communication with each terminal. This is particularly the case when there are a large number of terminals in communication with a single base station, especially if these terminals are spread out such that they cannot all be reached by a limited number of beams.

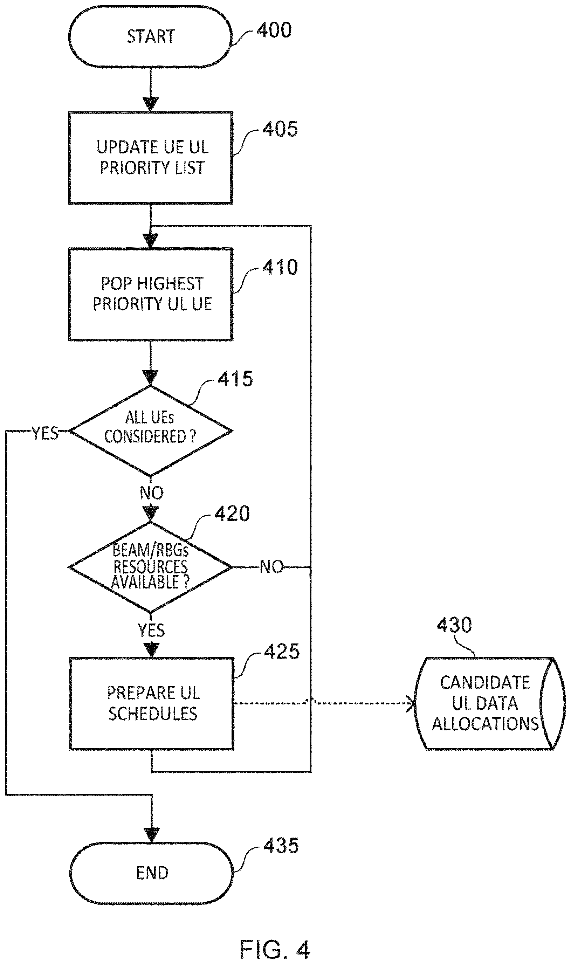

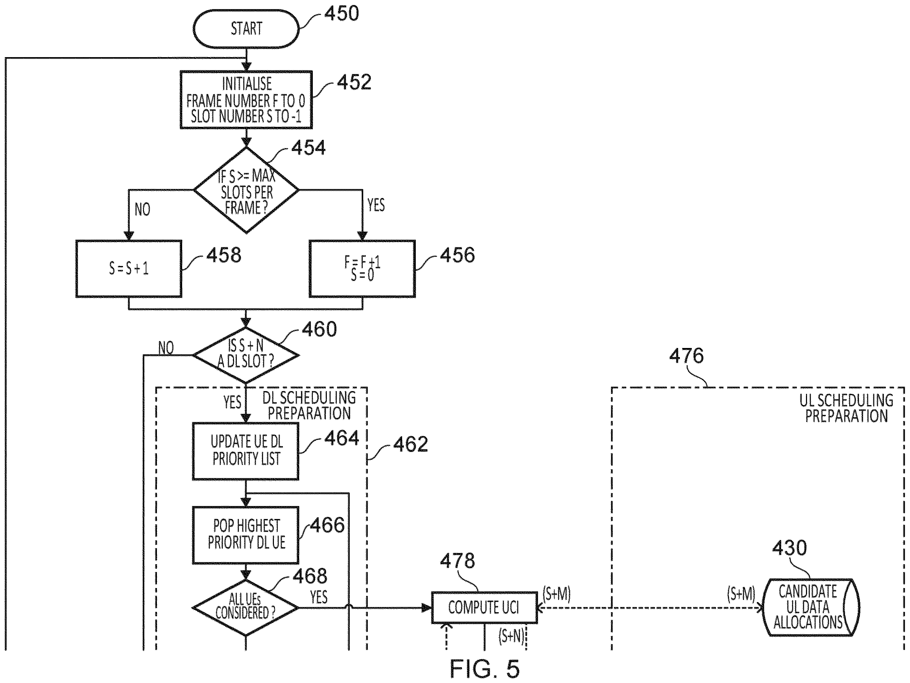

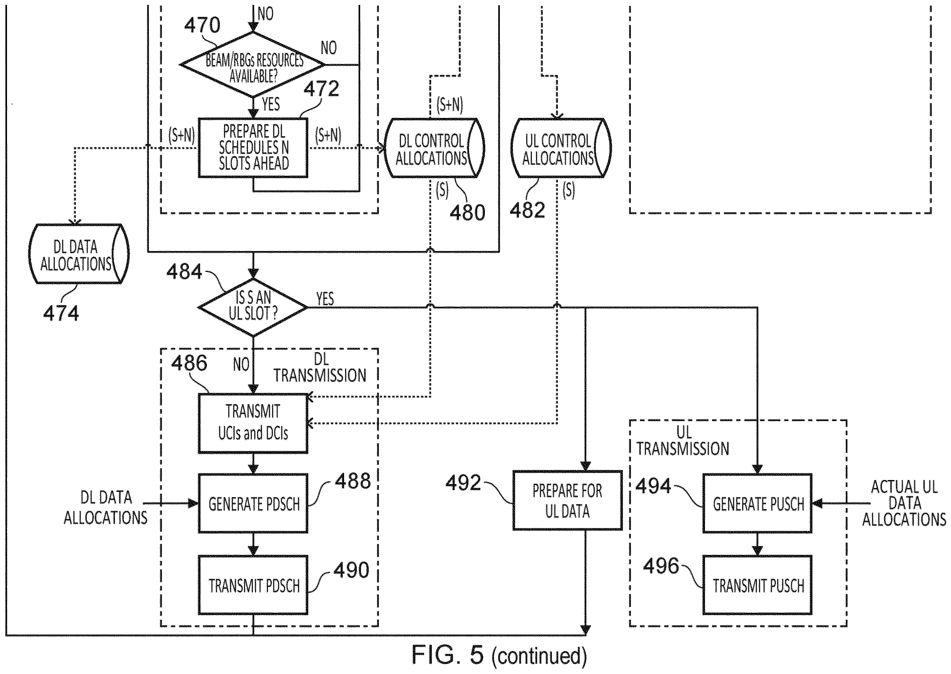

Hence, the base station 100 of Figure 1 also includes downlink scheduling circuitry 106 and uplink scheduling circuitry 108. The downlink scheduling circuitry 106 is arranged to perform a downlink scheduling process to determine downlink data allocations indicating, for a given downlink slot, which terminals the base station will transmit downlink data to and which wireless resources will be used to transmit the downlink data. Similarly, the uplink scheduling circuitry 108 is configured to perform an uplink scheduling process to determine uplink data allocations indicating, for one or more uplink slots subsequent to (e.g. later than) the given downlink slot, which terminals the base station expects to receive uplink information from, and which wireless resources it expects to be used. An example of a downlink scheduling process and an uplink scheduling process which may be employed by the uplink scheduling circuitry and the downlink scheduling circuitry will be discussed in more detail later with reference to figures 4 and 5. It will be appreciated that, while the uplink scheduling circuitry 108 and the downlink scheduling circuitry 106 are shown in Figure 1 as being separate, it is also possible for a single set of scheduling circuitry to perform both the downlink scheduling process and the uplink scheduling process.

The downlink data allocations and the uplink data allocations are communicated to the terminals in the form of control information - in particular, the control information includes downlink control information (DCI) indicating the downlink data allocations and uplink control information (UCI) indicating the uplink data allocations. The control information - including both the DCI and the UCI - is generated by control information generation circuitry 110 and transmitted by the antenna array as part of the downlink data.

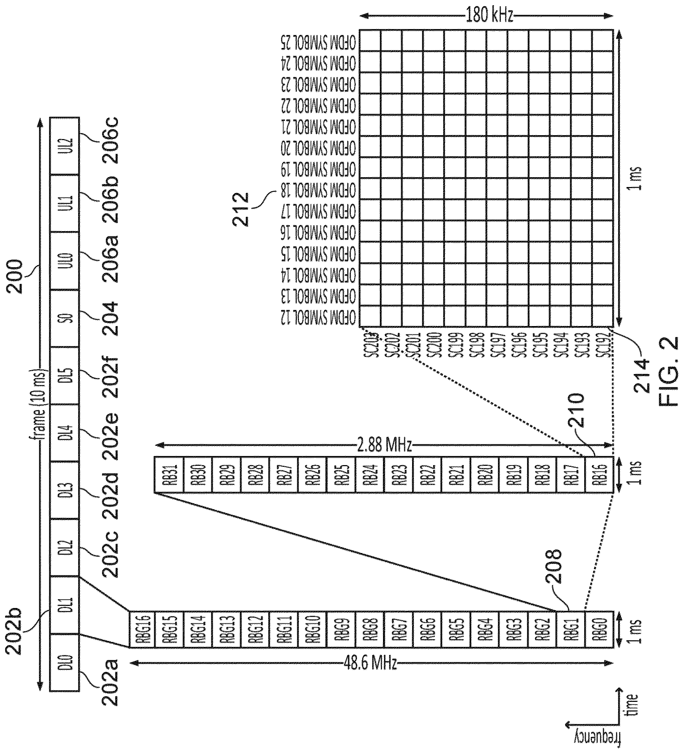

As noted above, the base station 100 is configured to communicate with the plurality of terminals in predetermined transmission time slots (downlink slots) and reception time slots (uplink slots). Figure 2 shows an example of how these time slots may be arranged within a time period referred to as a frame.

In the example of Figure 2, a frame 200 represents a 10ms time period and is divided into ten slots 202, 204, 206. In particular, the ten slots in this example comprise six downlink slots 202a-202f, three uplink slots 206a-206c and one special/reserved slot 204. The downlink slots represent periods of time during which downlink communication may be performed. In particular, the base station 100 is configured to transmit downlink data (also referred to as downlink information) to terminals during the downlink slots. On the other hand, the uplink slots represent periods of time during which uplink communication may be performed. In particular, the base station 100 is configured to receive uplink data (uplink information) from terminals during the uplink slots. The special/reserved slot S0 204 is used to provide some separation between downlink communication and uplink communication, and hence allow time for the wireless communication circuitry to reconfigure its operation between transmission and reception.

As shown in Figure 2, each slot - including both downlink slots 202 and uplink slots 206 - comprises seventeen resource block groups (RBGs) 208 in the frequency domain. Each RBG 208 represents a portion of the frequency range used by the base station to communicate with the plurality of terminals. In the example of Figure 2, the total frequency range is 48.6 MHz, and each RBG 208 covers a portion of that range - in this particular example, the first 16 RBGs (RBG0 to RBG15) each cover 2.88 MHz, while the 17th RBG (RBG16) covers a range of 2.52 MHz. However, it will be appreciated that this is just one example of the frequency ranges that could be covered by each of the RBGs, and in other examples all RBGs may cover an equal portion of the frequency range. Each RBG 208 is, in turn, divided into resource blocks (RBs) 210 in the frequency domain, each covering a portion of the frequency range covered by the RBG 208 - in the example of Figure 2, each RBG 208 other than the last one comprises sixteen RBs 210 (the last one, RBG16, comprises 14 RBs), each of which covers a frequency range of 180 kHz. Finally, each RB 210 is further divided in both the time domain and the frequency domain. In particular, each RB 210 comprises fourteen OFDM (orthogonal frequency domain multiplexing) symbols 212 in the time domain and 12 subcarriers (SC) 214 in the frequency domain.

Different RBGs 208 within a single slot can be allocated for communication with different terminals if desired, and the wireless communication resources identified for each data allocation will indicate the RBGs allocated. It is also possible to allocate individual RBs 210 to different terminals - in which case the wireless communication resources identified for each data allocation will indicate the relevant RBs 210 allocated. Whilst each subcarrier/OFDM symbol unit (denoted by the individual squares in the right hand side of Figure 2) may carry separate items of information, an individual RB is the smallest addressable unit in time and frequency, and hence the smallest individually allocatable unit of the frequency spectrum is the resource block.

By using different beams, it is possible to allocate the same RBs or RBGs to multiple terminals within the same slot, with each of the terminals using a different beam. Indeed, in one example implementation, when making data allocations, all of the useable RBGs for a downlink data allocation or an uplink data allocation are allocated to the identified terminal for that data allocation, and the use of different beams allows more than one terminal to be communicated with in a particular slot.

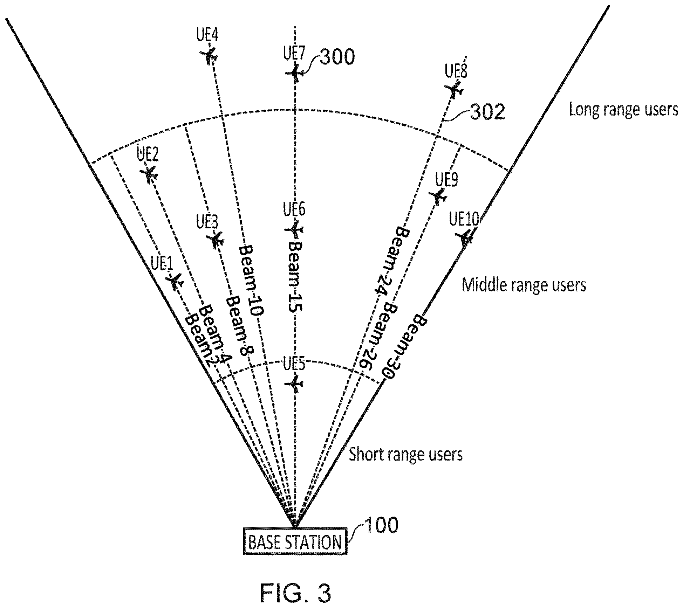

As discussed above, the base station 100 may employ multiple beams, each of which is directional (e.g. covers a limited angular range) to communicate with terminals in different directions at the same time. Figure 3 illustrates an example of how a base station 100 can communicate with a plurality of terminals 300 using a plurality of beams 302.

Figure 3 shows a base station 100 using eight beams 302 to communicate with multiple terminals 300 (also referred to as items of user equipment, UE). As mentioned earlier it may not be possible to use all of the beams at the same time, due to hardware and/or regulatory constraints. It will be appreciated that the number of beams shown in this example (eight) is just an example, and in practice the number of beams 302 employed will depend on multiple factors including the position of the base station 100, the number and positions of the terminals 300, hardware capabilities, etc. In addition, the number of beams 302 which can be used at any given time may - as mentioned above - be limited due to hardware and/or regulatory constraints, and this number may be either the same or different for uplink and downlink slots. In this particular example, each of the terminals 300 is installed on an aeroplane, however it will be appreciated that this is just one example situation in which the present technique could be employed, and other examples are also possible.

Figure 3 illustrates communication using a number of narrow (e.g. covering a narrow angular range), directional beams; however, it will be appreciated that the dotted lines shown for each beam represent the boresight direction, and not necessarily the entire angular range covered by each beam. As shown in Figure 3, even though each of the beams 302 is fairly narrow - for example, Figure 3 shows an example where the terminals 300 are installed on aeroplanes, for which narrow beams which can be used to reliably transmit and receive data over long distances may be particularly useful - it is possible for multiple terminals 300 to be present along the path of a single beam 302. For example, terminals UE5, UE6 and UE7 are all present along the path of beam 15. If different resources within the beam are allocated to each of the terminals, it is possible for the base station 100 to communicate with all of the terminals along the path of the beam at the same time. Alternatively, those terminals that use the same beam may be communicated with in different time slots.

However, since the number of beams that can be used by the base station 100 at any given time is limited, the base station 100 may not be able to communicate with all of the terminals in the area at a given time.

In addition, for some of the terminals 300, there may be restrictions in terms of which time slots can be used for uplink communication between those terminals and the base station. For example, the terminal identified in Figure 3 as a "short range user" (where a "user" is to be interpreted as referring to an individual terminal) - UE5 - may be close enough that it can be allocated any of the uplink time slots UL0, UL1 or UL2 since the round-trip delay is short enough that any data it transmits will be received by the base station within whichever of those uplink time slots has been allocated. However, for the "middle range users" - UE1, UE2, UE3, UE6, UE9 and UE10 - those terminals may be far enough away that if they were allocated the time slot UL0, the round-trip delay may be sufficient that any data they transmitted may not be received by the base station in time to be received within that time slot UL0. Hence the base station may be constrained to only allocate such terminals either the uplink time slot UL1 or the uplink time slot UL2. Similarly, for any "long-range users" - UE4, UE7 or UE8 - such terminals may only be allocated the uplink time slot UL2, in order to allow (having regard to the round-trip delay) sufficient time for data to be transmitted from such terminals in time to be received by the base station in the allocated time slot.

Hence, in order to maintain a fair distribution of available communication resources between all of the terminals 300 despite these constraints, it is advantageous for downlink scheduling circuitry and uplink scheduling circuitry to be provided, to perform corresponding downlink and uplink scheduling processes.

Figure 4 illustrates an uplink scheduling process that may be performed in accordance with one example implementation, in this example the uplink scheduling process being performed once per frame, and resulting in the generation of a candidate list of uplink data allocations. In one example implementation, all three possible uplink slots are considered each time the uplink scheduling process is performed, and hence the wireless communication resources considered are those wireless communication resources available across all three uplink slots. In an alternative implementation, the process of Figure 4 can be repeated sequentially, once for each uplink slot.

At step 405, an uplink priority list is updated, this list being used to determine the order in which the terminals should be considered by the uplink scheduling circuitry. The uplink priority list is updated each time the uplink scheduling process is performed, and hence is updated in this example once per frame. The uplink priority list may be based on a variety of factors, and in one example implementation is based upon the average data rate experienced by each of the terminals during uplink communication in previous uplink slots.

The uplink priority list can be determined in a variety of ways. In one example implementation, it is determined using an equation that can calculate the highest priority terminal. For example, an equation such as the following, which represents a proportional fair scheduling (PFS) algorithm, may be used:

$$u_{\mathrm{PFS}}^{\mathrm{UL}} = \arg \max_{u \in \{1,2,\ldots,U\}} \frac{d_{u,n}^{\mathrm{UL}}}{r_{u,n}^{\mathrm{UL}}}$$

wherein:

$u_{\mathrm{PFS}}^{\mathrm{UL}}$ is the selected terminal;

$d_{u,n}^{\mathrm{UL}}$ is an uplink data rate which can be achieved by terminal u in transmission time slot n;

$r_{u,n}^{\mathrm{UL}}$ is an average uplink data rate experienced by terminal u during one or more transmission time periods prior to transmission time slot n.

If U is the number of active terminals in the system, then the proportionally fair scheduling mechanism can identify a terminal that maximises the above metric. By repeated use of this equation, a list can be established at step 405 indicating the relative priority of each of the terminals. For example, after each iteration of the equation, any terminal that has already been selected (e.g. following a previous iteration of the equation in the same slot) may be excluded from the calculation, so that each iteration identifies the next highest priority terminal. An alternative approach could be to use a sorting algorithm to evaluate a function (e.g. that defined by the above equation) for all of the terminals and sort them into a priority list; the next highest priority terminal could then be popped from the top of the priority list. Whichever approach is used, in the next slot all terminals are considered again (e.g. regardless of whether or not they were selected in a previous slot).

In one example implementation, the average rate per terminal may be derived using a moving average filter. For example, each average data rate may be calculated according to the following equation, where $r_{u,n}$ is the average data rate (either uplink or downlink) for terminal u up until slot n, $\alpha$ is a constant and $A_{u,n-1}$ is a value indicative of the wireless communication resources allocated to terminal u in slot n-1 (e.g. this could be the number of bytes allocated during slot n-1), noting that the value of A could be zero if no resources were allocated to terminal u in slot n-1:

$$r_{u,n} = (1 - \alpha) \, r_{u,n-1} + \alpha \, A_{u,n-1}$$

Once the uplink priority list has been updated, the highest priority terminal (UE) in the uplink priority list is popped/selected at step 410. For example, this could be the terminal at the top of the priority list. At step 415 it is then determined whether all terminals have been considered, which will for example be the case if when performing step 410 it was determined that there were no more terminals to select.

If there are no more terminals to consider, then the process proceeds to step 435, where the uplink scheduling process ends. However, assuming the currently selected terminal has not yet been considered, the process proceeds to step 420, where it is determined whether there are any suitable wireless communication resources (e.g. beams, RBGs, etc.) available for allocation to the selected terminal. If there are resources available, then the process proceeds to step 425 where a downlink data allocation is determined for that terminal by allocating wireless communication resources (including, for example, a selected beam and, if appropriate, selected RBGs within the beam) to the selected terminal. The uplink data allocation so determined is then added to the candidate uplink data allocations in storage 430, and the process then returns to step 410 to consider the next highest priority terminal.

On the other hand, if at step 420 it is determined that no resources are available for allocating to the selected terminal (for example because the wireless communication resources that would be needed have already been allocated to another terminal (e.g. if another terminal using the same beam has been allocated all the RGBs) or cannot be provided given the wireless communication resources allocated to other terminals (e.g. if the maximum number of beams have already been used to earlier allocations)), step 425 is skipped and the method returns to step 410 in order to determine the next highest priority terminal.

As a result of performance of the process of Figure 4, it will be appreciated that a candidate list of uplink data allocations is produced, which can then be referred to when considering the entire frame for which that candidate list has been prepared.

Figure 5 is a flow diagram illustrating an example of a method according to the present technique. All of the steps in Figure 5 take place in the base station 100, except for steps 494 and 496 which take place in a terminal.

As shown in Figure 5, the method starts at step 450, and proceeds to step 452 where a frame number, F, is initialised to 0 and a slot number, S, is initialised to -1. The method then comprises a step 454 of determining whether the slot number, S, is greater than or equal to the maximum number of slots per frame SMax (e.g. in the example of Figure 2, SMax=10). This step is a check of whether the current slot S is in the same frame as the previous slot considered by the method; when S is greater than or equal to SMax, this indicates that S is in the next frame, whereas when S is less than SMax this indicates that S is in the same frame as the previously considered slot. Hence, when S is greater than or equal to SMax ("YES"), the method proceeds to a step 456 of setting the value of F to F+1 (e.g. incrementing the value of F by 1) and setting the value of S to 0 - this advances the calculation to the first slot (S=0) of the next frame. On the other hand, when S is less than SMax ("NO"), the value of F is not changed, but the value of S is incremented at step 458 by 1 (e.g. the value of S is updated to S+1).

Once the values of S and F have been determined (e.g. once they have - where necessary - been updated, either in step 456 or step 458), it is determined at step 460 whether the slot identified by S + N (e.g. a slot N slots ahead of slot S) is a downlink slot. N is a constant, and is defined such that the downlink scheduling process and the uplink scheduling process are performed a number of slots ahead of the slot in which the DCI and UCI will be transmitted. The value of N is implementation dependent, but in one example N could be set to 5.

If it is determined that slot S + N is a downlink slot ("YES"), a downlink scheduling process (also referred to as a DL scheduling preparation) 462 is performed by the downlink scheduling circuitry of the base station to determine the downlink data allocations (e.g. identifying terminals to which downlink data is to be transmitted during slot S + N and wireless communication resources to be used by the base station to transmit the downlink data) for slot S + N. The downlink scheduling process 462 comprises a step 464 of updating a downlink priority list which is used to determine the order in which the terminals should be considered by the downlink scheduling circuitry. The downlink priority list is updated each time the downlink scheduling process 462 is performed (i.e. once per downlink data slot), and may be updated based on, for example, the average data rate experienced by each of the terminals during downlink communication in previous downlink slots. In one example implementation, step 464 can be performed in an analogous manner to step 405 of the earlier described Figure 4, using a proportionally fair scheduling mechanism but considering downlink data rates rather than uplink data rates.

Once the downlink priority list has been updated, the highest priority terminal (UE) in the downlink priority list is popped/selected at step 466. For example, this could be the terminal at the top of the priority list. Then, at step 468, it is determined whether all terminals have been considered, which will for example be the case if when performing step 466 it was determined that there were no more terminals to pop.

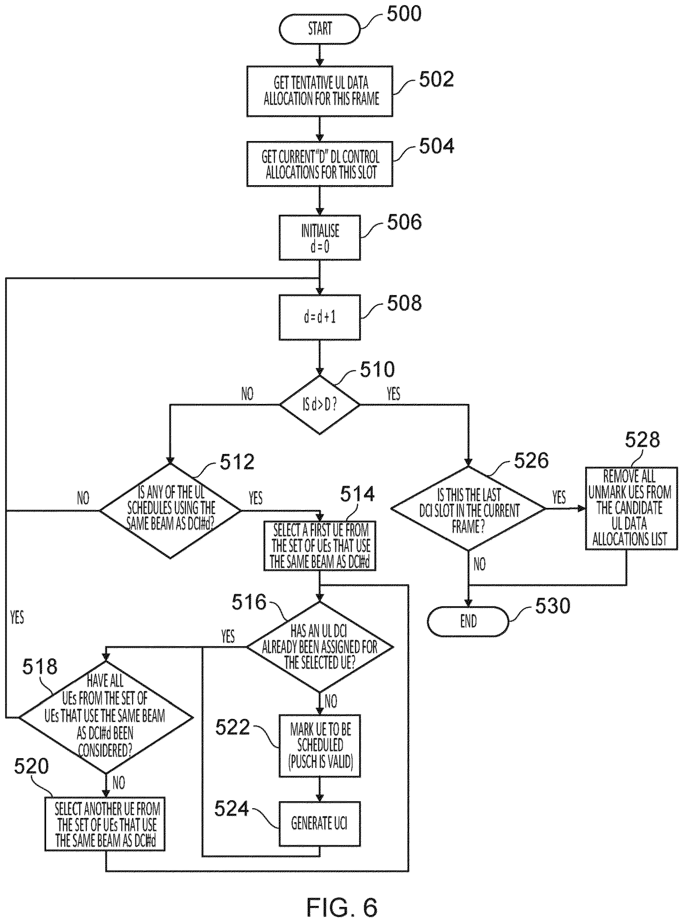

If there are no more terminals to consider ("YES"), the downlink scheduling process ends, and the method proceeds to the compute UCI step 478 (discussed below in more detail with reference to Figure 6). On the other hand, if there are more terminals to consider ("NO"), it is determined at step 470 whether there are any suitable wireless communication resources (e.g. beams, RBGs, etc.) available for allocation to the terminal popped in step 466. If there are resources available ("YES"), the method comprises a step 472 of determining a downlink data allocation for that terminal by allocating wireless communication resources (including, for example, a selected beam and, if appropriate, selected RBGs within the beam) to the selected terminal, and storing the downlink data allocation for slot S+N at step 474, before returning to the step 466 of popping the (next) highest priority terminal. On the other hand if at step 470 it is determined that no resources are available for allocating to the selected terminal (for example because the wireless communication resources that would be needed have already been allocated to another terminal (e.g. if another terminal using the same beam has been allocated all the RGBs) or cannot be provided given the wireless communication resources allocated to other terminals (e.g. if the maximum number of beams have already been used for earlier allocations)), step 472 is skipped and the method returns to step 466 (e.g. the next highest terminal is popped).

As noted above, once all of the terminals have been considered in the downlink scheduling process 462 - e.g. once the result of step 468 is "YES" - the process proceeds to step 478 where the uplink control information (UCI) computation is performed. In particular, the control information generation circuitry 110 is arranged to generate, for transmission in a given transmission time slot, in the example shown in Figure 5 this being slot S+N, downlink control information (DCI) identifying one or more downlink data allocations, and this DCI information is shown schematically in Figure 5 by the element 480. In one particular embodiment, the downlink control information will provide information identifying the downlink data allocations 474 for slot S+N.

The control information generation circuitry 110 is also arranged to perform at step 478 the UCI computation step to determine the uplink control information to be provided in transmission slot S+N. As shown in Figure 5, it receives as its inputs the downlink control information for slot S+N, and the candidate list of uplink data allocations 430. Those candidate uplink data allocations will relate to the subsequent reception slots in the frame, indicated schematically as slots S+M, where M is greater than N, and can take a value to indicate any of the three reception slots.

The process of computing the uplink control information at step 478 will be discussed in more detail later with reference to Figure 6, but in summary aims to identify one or more of the candidate uplink data allocations whose terminals can be contacted in the transmission slot S+N to provide the required uplink control information to identify the uplink data allocation, having regard to the wireless communication resources that will be utilised in the transmission slot S+N, which will be those wireless communication resources identified by the downlink control information for the transmission slot S+N. This will result in the generation of uplink control information to store in the storage 482.

From Figure 5, it will be appreciated that step 478 is performed each time the downlink scheduling process 462 is performed, and hence is re-performed for each transmission time slot. However, the candidate list of uplink data allocations is only recomputed once per frame, and hence for all of the transmission time slots of the given frame, the same candidate list of uplink data allocations 430 will be referred to.

Once step 478 has been performed, or if the no path is followed from the earlier step 460 because it is determined that slot S+N is not a downlink slot (and hence no scheduling operation needs to be performed), the process proceeds to step 484. Here the slot S is considered (i.e. the actual current slot being utilised by the wireless communication circuitry 104 and associated antenna array 102). If slot S is determined to be a downlink slot at step 484, then the process proceeds to step 486 where the UCI and DCI information is transmitted that has previously been computed for inclusion in slot S. In one example implementation this will include the DCI for slot S and UCI for one or more of the subsequent uplink slots of the frame. This control information is typically the first data transmitted in a given downlink slot, and in one particular example occupies the first few OFDM symbols. In one example implementation, any terminal that is able to receive the downlink transmission is arranged to scan the first few OFDM symbols to determine whether any DCI or UCI information has been included for it.

At step 488, a Physical Downlink Shared Channel (PDSCH) is generated for the transmission slot S, to prepare the data that is to be transmitted to each of the terminals identified by the earlier computed downlink data allocations 474 for slot S, using the specific wireless communication resources specified for each downlink data allocation. This generated PDSCH is then transmitted at step 490, causing the relevant data to be transmitted to each of the terminals identified by the downlink data allocations for the transmission slot S.

If at step 484 it is determined that slot S is an uplink slot, then the process proceeds to step 492 where the base station prepares itself for the reception of uplink data. As shown schematically by the dotted box entitled "uplink transmission", steps will also be undertaken by a terminal that has previously received uplink control information in an earlier transmission slot of the frame identifying that it has been allocated wireless communication resources to transmit data in the uplink slot S. In particular, the terminal will generate at step 494 a Physical Uplink Shared Channel (PUSCH) identifying the data to be transmitted, using the specific wireless communication resources specified for the associated uplink data allocation. This generated PUSCH is then transmitted at step 496, causing the relevant data to be transmitted from the terminal to the base station. Steps 494 and 496 will be repeated for each terminal that has been allocated an uplink data allocation in the uplink slot S, as indicated by UCI information received by that terminal in an earlier transmission slot of the frame.

Figure 6 is a flow diagram illustrating the UCI computation step 478 of Figure 5 in more detail. The process starts at step 500, and then at step 502 the tentative uplink data allocation for the current frame is obtained, this being the candidate list 430. At step 504, the downlink control information (identifying each of the downlink data allocations) for the currently considered transmission slot are obtained from the storage 480. There will be a total of D downlink data allocations indicated by the downlink control information. In one example implementation, in the downlink direction one beam is allocated to only one terminal, and hence D also indicates the number of beams used in the current transmission slot, but in a more general case multiple users could be scheduled on the same beam, and hence D will not necessarily be equal to the number of beams but could instead be a larger value.

At step 506, a parameter d is initialised to 0, and then at step 508 that parameter d is incremented by 1. At step 510 it is determined whether the parameter d is greater than D. If so, this means that it is not possible to include any more uplink control information in the current transmission slot, and the process hence proceeds to step 526 where it is determined whether the current transmission slot being considered is the last DCI bearing slot in the current frame. If not, the process merely ends at step 530, but if it is, then at step 528 (and prior to proceeding to step 530) all of the unused terminals identified in the candidate list of uplink data allocations 430 are removed, hence effectively clearing the candidate uplink data allocation list. As will be apparent from the earlier discussion, this candidate uplink data allocation list will be recomputed for the next frame.

Provided the parameter d is less than or equal to D the process proceeds to step 512, where it is determined whether any of the available candidate uplink data allocations in the list 430 employ the same beam as identified by the downlink control information specified for downlink data allocation d. If not, then the process merely returns to step 508, where the parameter d is incremented before proceeding to step 510.

If at step 512 it is determined that there is at least one of the candidate uplink data allocations that uses the same beam as identified by the downlink control information specified for downlink data allocation d, then the process proceeds to step 514 where a first terminal from the set of terminals that use the same beam is selected. At step 516 it is then determined whether an uplink data allocation has already been indicated for the same terminal in the currently considered transmission time slot. If it has, then it will not be allocated again at this point, and instead the process proceeds to step 518, where it is determined whether all of the terminals from the set of terminals that use the same beam as identified by the downlink control information specified for downlink data allocation d have been considered. If not, then another terminal from the set is selected at step 520, and the process returns to step 516. Otherwise, the process proceeds from step 518 back to step 508, where the parameter d is incremented.

When at step 516 it is determined that an uplink data allocation has not already been assigned for the selected terminal within the current transmission slot, then at step 522 that terminal is marked as to be scheduled, at which point it is either removed from the candidate list, or is marked in the candidate list as already being scheduled, and hence not to be considered again when determining uplink data allocations to be indicated in the current frame. At step 524, the UCI is determined for the terminal, and the process then proceeds to step 518.

It should be noted that whilst in principle the path from step 520 back to 516 can proceed until all of the terminals in the set of terminals that use the same beam have been considered, in one example implementation there may be a limit on how many terminals can be scheduled on the same beam for uplink communication. This limit may be due to hardware constraints or it may be due to channel conditions. For example, since power is shared across the downlink terminals, it may be desired to limit the number of terminals that can simultaneously be transmitted to in order to ensure sufficient link quality.

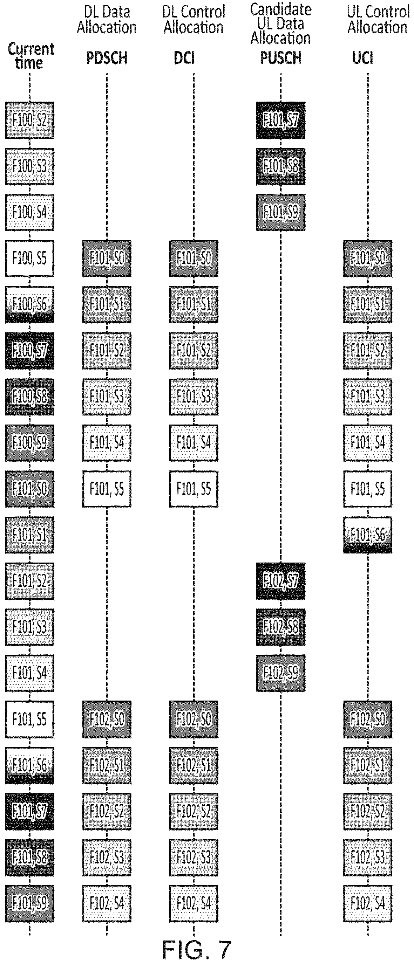

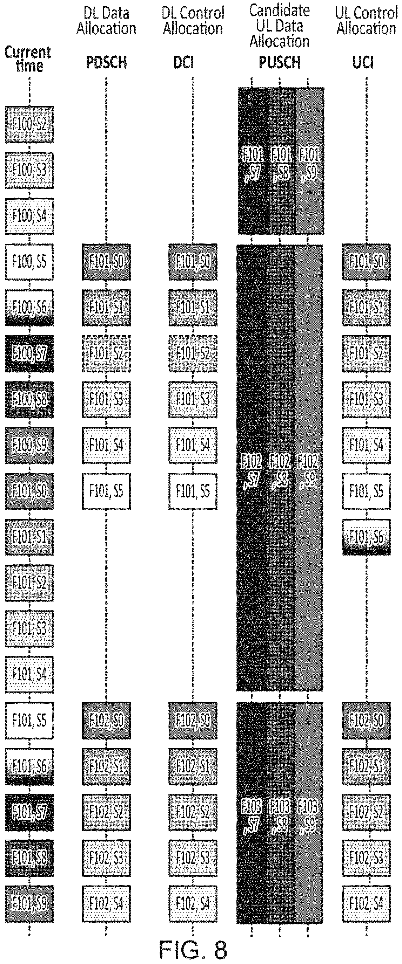

Figures 7 and 8 are timing diagrams schematically illustrating the relative timings of the downlink data allocation, candidate uplink data allocation, and the computation of downlink and uplink control information, in accordance with the example implementation discussed earlier with reference to Figure 5. As noted earlier when discussing step 460 of Figure 5, the downlink scheduling operation, and the corresponding computation of DCI and UCI information, can operate five slots ahead of the actual live current slot being processed by the wireless communication circuitry 104 and antenna array 102, and this is clearly illustrated in both Figures 7 and 8.

With regard to the generation of the candidate list of uplink data allocations, this actually occurs an entire frame ahead of any scheduling being performed by the downlink scheduling operation, which gives significant flexibility in how that computation is performed. For instance, as shown in Figure 7, in one example implementation the candidate list of uplink data allocations can be computed sequentially for each reception time slot, with the timing being controlled to ensure that the candidate list of uplink data allocations for each reception time slot has been computed for a particular frame before any downlink scheduling is performed in respect of that particular frame. In an alternative implementation, as illustrated in Figure 8, the candidate list of uplink data allocations for each of the reception time slots can be computed in parallel, effectively allowing the entirety of the frame period to be used for computing the candidate list of uplink data allocations.

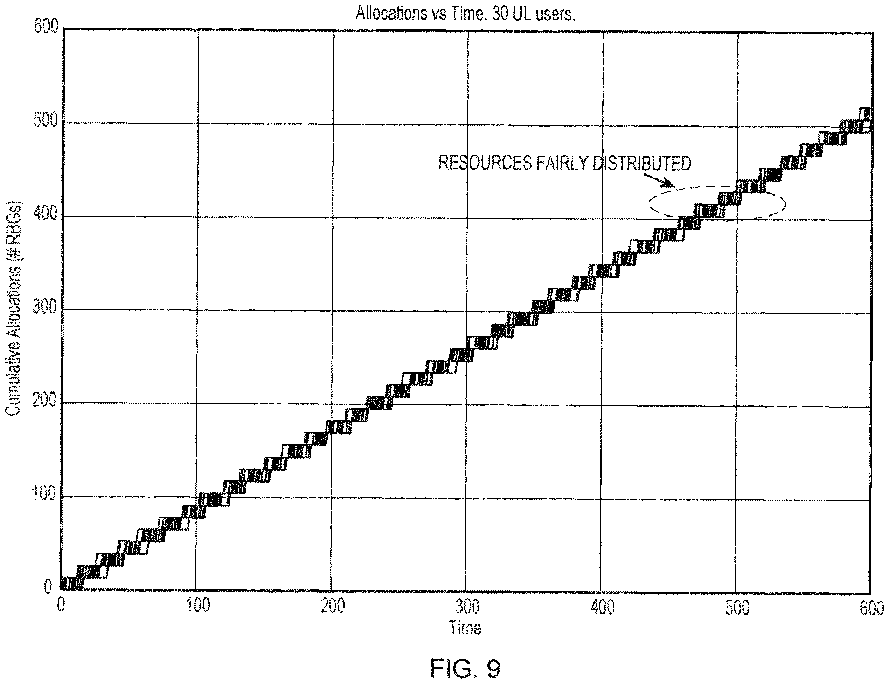

The technique described herein allows wireless communication resources to be shared amongst the terminals more fairly, as shown by the graph in Figure 9. The graph in Figure 9 shows, along the y-axis, the cumulative number of RBGs allocated for uplink communication and, along the x-axis, time (in frames). Each line plotted on the graph represents one of the terminals in communication with the base station, and the graph shows that when the downlink and uplink data allocations are determined according to the method described herein, the RBGs used for uplink can be distributed amongst the terminals in approximately equal proportions.

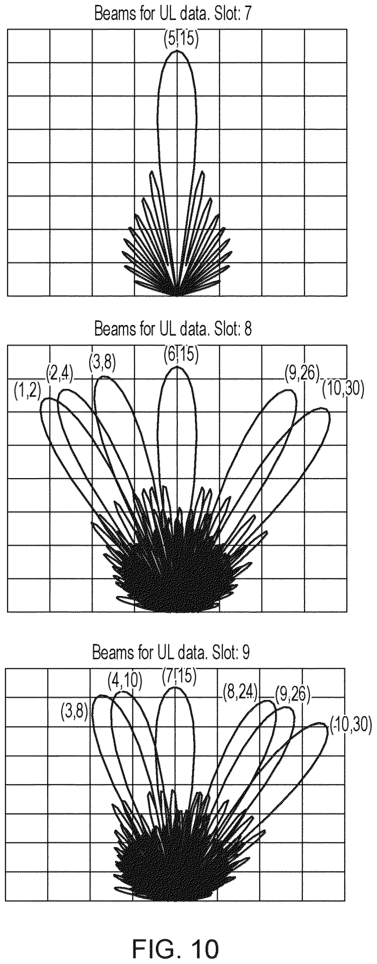

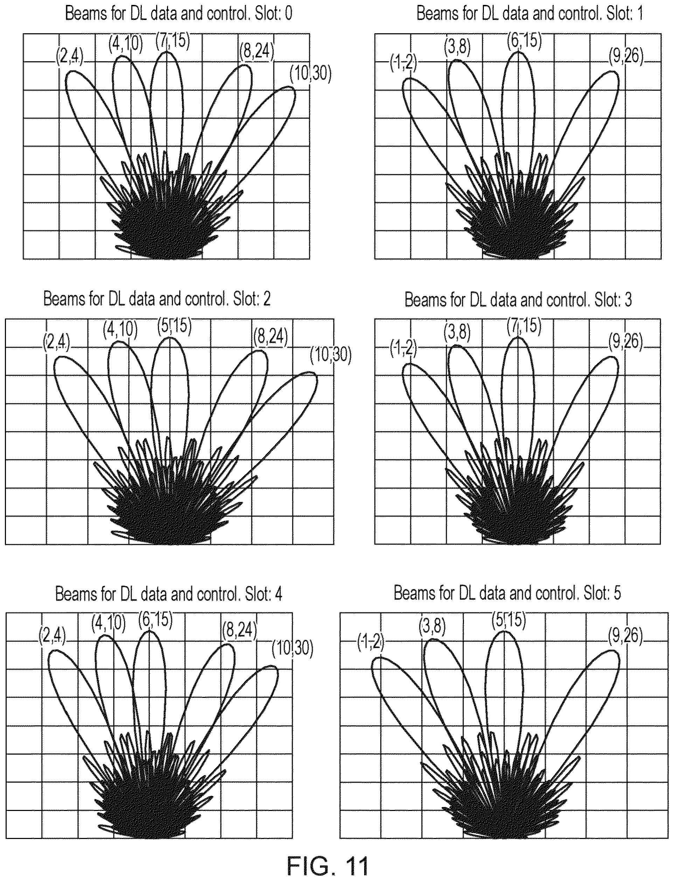

Figures 10 and 11 illustrate beam patterns that may be used for reception/uplink time slots and transmission/downlink time slots, respectively, in accordance with one particular example implementation. Considering Figure 10, it can be seen that one beam is provided in uplink slot UL0, also referred to herein as slot 7, whilst six beams are provided in uplink slot UL1, also referred to herein as slot 8, and six beams are also provided in uplink slot UL2, also referred to herein as slot 9. Regarding the numbers in brackets, the first number indicates the terminal, and the second number indicates the beam used. The numbering used here aligns with the example discussed earlier with reference to Figure 3, and hence for example it will be appreciated that terminal 5 can be allocated an uplink data allocation in slot 7 using beam 15 (where slot 0 corresponds to DL0 in Figure 2 and each slot in a frame is numbered consecutively).

Figure 11 illustrates beam patterns that could be used for each of the six transmission time slots. Again, regarding the numbers in brackets, the first number indicates the terminal, and the second number indicates the beam used, and the numbering aligns with the example discussed earlier with reference to Figure 3. In the example shown in Figure 11, the downlink beams are sufficiently spatially separated to ensure no cross-talk interference (or inter-beam interference). In contrast, with regards to the uplink beams shown in Figure 10, these beams may overlap. If users are not sufficiently separated in the spatial domain, the scheduler may allocate users on different RBGs, and hence separate them in the frequency domain.

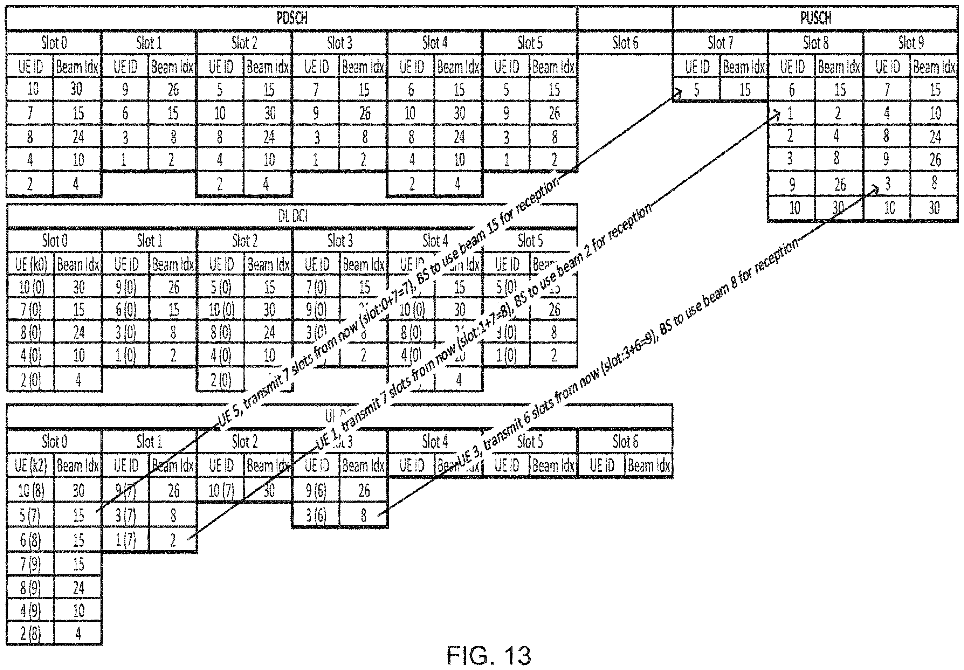

Figure 13 provides a table illustrating the uplink and downlink schedules that may be computed in accordance with the specific example implementation shown in Figures 10 and 11, and illustrates the form of the DCI (see penultimate section of the table labelled DL DCI) and UCI (see final section of the table labelled UL DCI) that may be transmitted in the transmission time slots in accordance with this particular example.

It should be noted that the bracketed term provided in the table of Figure 13 in association with the DCI and UCI information indicates when the downlink data or the uplink data is allocated relative to the current slot. For example, all DCI have a bracketed value of zero, to indicate that the downlink data is zero slots away, i.e. will be transmitted in the current slot. However, for the UCI, the bracketed value indicates when the uplink data should be transmitted relative to the current slot.

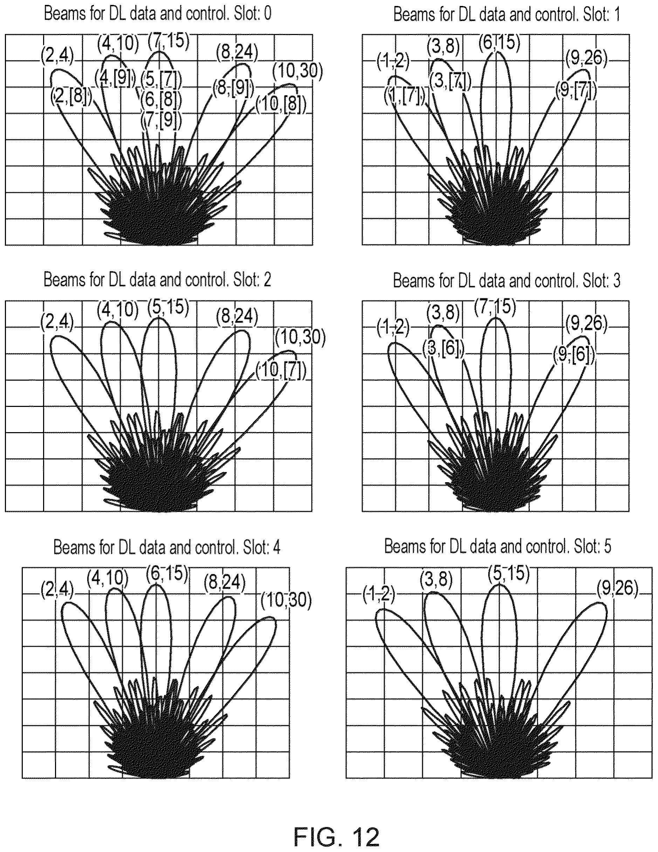

Figure 12 is a diagram schematically illustrating how the downlink beams are used to communicate the DCI and UCI information in accordance with the specific example shown in the table of Figure 13. The numbering provided externally to the beams is of the form (u, b) to indicate that downlink terminal number u has been allocated transmit beam number b for downlink transmission. The numbering provided inside the beams is of the form (u', [k2]) to indicate that uplink terminal number u' is allocated beam number b with its uplink data to be transmitted by the terminal k2 slots later. As is apparent from the table of Figure 13 and from Figure 12, all of the candidate list of uplink data allocations are able to be accommodated, since it is possible to transmit all of the associated UCI data for those uplink data allocations within one of the transmission slots. In fact, all of the required UCI data can be transmitted within the first four transmission slots of the frame.

It will be appreciated that the techniques described herein provide a particularly efficient mechanism for ensuring that uplink scheduling can be performed in a fair manner, allowing the available uplink resources to be spread evenly amongst the terminals.

In the present application, the words "configured to... " are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the invention have been described in detail herein with reference to the accompanying drawings, it is to be understood that the invention is not limited to those precise embodiments, and that various changes, additions and modifications can be effected therein by one skilled in the art without departing from the scope of the invention as defined by the appended claims. For example, various combinations of the features of the dependent claims could be made with the features of the independent claims without departing from the scope of the present invention.

**Claims**

1. A base station for wireless communication with a plurality of terminals, comprising:

   wireless communication circuitry configured, during transmission time slots allocated for transmission, to transmit downlink data for reception by one or more of the terminals, and further configured, during reception time slots allocated for reception, to receive uplink data transmitted by one or more of the terminals;
   downlink scheduling circuitry configured to determine, for each transmission time slot, one or more downlink data allocations, each downlink data allocation identifying a terminal to which downlink data is to be transmitted, and wireless communication resources to be used by the wireless communication circuitry during the transmission time slot to transmit the downlink data to the identified terminal;
   uplink scheduling circuitry configured to operate ahead of the downlink scheduling circuitry to determine a candidate list of uplink data allocations identifying, for one or more reception time slots subsequent to a current transmission time slot being considered by the downlink scheduling circuitry, terminals which may be allocated to transmit uplink data within the one or more reception time slots and, for each identified terminal, the wireless communication resources to be used for that identified terminal; and
   control information generation circuitry to generate, for transmission in a given transmission time slot, downlink control information identifying one or more downlink data allocations, and uplink control information identifying one or more uplink data allocations selected from the candidate list, **characterised in that** the control information generation circuitry is arranged to select each uplink data allocation from the candidate list so as to seek to ensure that the terminal associated with each selected uplink data allocation will be able to receive the uplink control information, given the wireless communication resources to be employed by the wireless communication circuitry during the given transmission time slot.

2. A base station as claimed in Claim 1, further comprising antenna circuitry that is operated by the wireless communication circuitry to provide beams selected from a set of available beams, and for each identified terminal the wireless communication resources comprise at least a selected beam to be used for communication with the identified terminal.

3. A base station as claimed in Claim 2, wherein the beams in the set of beams are directional beams, and for any particular selected beam the terminals able to use that selected beam will be dependent on locations of those terminals.

4. A base station as claimed in Claim 2 or Claim 3, wherein the base station is constrained to not exceed a defined maximum number of beams in the given transmission time slot.

5. A base station as claimed in any of claims 2 to 4, wherein the wireless communication circuitry is able to change the selected beams between each transmission time slot and between each reception time slot.

6. A base station as claimed in any preceding claim, wherein the wireless communication resources to be employed by the wireless communication circuitry during the given transmission time slot are the wireless communication resources used for each downlink data allocation determined for that transmission time slot.

7. A base station as claimed in any preceding claim, wherein the one or more downlink data allocations identified by the downlink control information comprise each downlink data allocation for the given transmission time slot, and the one or more uplink data allocations identified by the uplink control information relate to one or more future reception time slots occurring subsequent to the given transmission time slot.

8. A base station as claimed in any preceding claim, wherein the transmission time slots and reception time slots are organised into frames, each frame comprising multiple transmission time slots and one or more reception time slots.

9. A base station as claimed in Claim 8, wherein the uplink scheduling circuitry is arranged to compute the candidate list of uplink data allocations for each reception time slot of a given frame ahead of the downlink scheduling circuitry computing the downlink data allocations for any transmission time slot of the given frame.

10. A base station as claimed in Claim 9, wherein the uplink scheduling circuitry is arranged to compute the candidate list of uplink data allocations either sequentially for each reception time slot of the given frame or for all reception time slots of the given frame in parallel.

11. A base station as claimed in any of claims 8 to 10, wherein the downlink scheduling circuitry is arranged to perform a separate scheduling operation for each transmission time slot of the frame in order to determine the one or more downlink data allocations for that transmission time slot.

12. A base station as claimed in any of claims 8 to 11, wherein the uplink scheduling circuitry is arranged to perform a scheduling operation once per frame such that the candidate list of uplink data allocations for each reception time slot is recomputed for each frame.

13. A base station as claimed in any of claims 8 to 12, wherein each frame comprises a sequence of transmission time slots preceding a sequence of reception time slots.

14. A base station as claimed in any preceding claim, wherein:

the wireless communication resources identify one or more beams to be used for communication; and
the control information generation circuitry is arranged, for each downlink data allocation determined by the downlink scheduling circuitry for the given transmission time slot, to identify the beam specified by the wireless communication resources of that downlink data allocation, to select, if available, one or more uplink data allocations in the candidate list that also employ the beam identified for that downlink data allocation, and to generate the uplink control information for transmission in the given transmission time slot so as to identify each selected uplink data allocation.

15. A method of operating a base station for wireless communication with a plurality of terminals, comprising:

during transmission time slots allocated for transmission, transmitting downlink data for reception by one or more of the terminals;
during reception time slots allocated for reception, receiving uplink data transmitted by one or more of the terminals;
determining for each transmission time slot, using downlink scheduling circuitry, one or more downlink data allocations, each downlink data allocation identifying a terminal to which downlink data is to be transmitted, and wireless communication resources to be used during the transmission time slot to transmit the downlink data to the identified terminal;
determining, using uplink scheduling circuitry operating ahead of the downlink scheduling circuitry, a candidate list of uplink data allocations identifying, for one or more reception time slots subsequent to a current transmission time slot being considered by the downlink scheduling circuitry, terminals which may be allocated to transmit uplink data within the one or more reception time slots and, for each identified terminal, the wireless communication resources to be used for that identified terminal; and
generating, for transmission in a given transmission time slot, downlink control information identifying one or more downlink data allocations, and uplink control information identifying one or more uplink data allocations selected from the candidate list.
**characterised in that** each uplink data allocation is selected from the candidate list so as to seek to ensure that the terminal associated with each selected uplink data allocation will be able to receive the uplink control information, given the wireless communication resources to be employed during the given transmission time slot.

**Patentansprüche**

1. Basisstation zur drahtlosen Kommunikation mit einer Vielzahl von Endgeräten, Folgendes umfassend:

eine drahtlose Kommunikationsschaltung, die ausgebildet ist, um während der für die Übertragung zugewiesenen Sendezeitschlitze Downlink-Daten für den Empfang durch eines oder mehrere der Endgeräte zu übertragen, und ferner ausgebildet ist, um während der für den Empfang zugewiesenen Empfangszeitschlitze Uplink-Daten zu empfangen, die von einem oder mehreren der Endgeräte übertragen werden;
eine Downlink-Planungsschaltung, die ausgebildet ist, um für jeden Sendezeitschlitz eine oder mehrere Downlink-Datenzuweisungen zu bestimmen, wobei jede Downlink-Datenzuweisung ein Endgerät identifiziert, an das Downlink-Daten übertragen werden sollen, und drahtlose Kommunikationsressourcen, die von der drahtlosen Kommunikationsschaltung während des Sendezeitschlitzes verwendet werden sollen, um die Downlink-Daten an das identifizierte Endgerät zu übertragen;
eine Uplink-Planungsschaltung, die so ausgebildet ist, dass sie vor der Downlink-Planungsschaltung arbeitet, um eine Kandidatenliste von Uplink-Datenzuweisungen zu bestimmen, die für einen oder mehrere Empfangszeitschlitze im Anschluss an einen aktuellen Sendezeitschlitz, der von der Downlink-Planungsschaltung berücksichtigt wird, Endgeräte, die zur Übertragung von Uplink-Daten innerhalb des einen oder der mehreren Empfangszeitschlitze zugewiesen werden können, und für jedes identifizierte Endgerät die drahtlosen Kommunikationsressourcen, die für dieses identifizierte Endgerät zu verwenden sind, identifiziert; und

eine Steuerinformations-Erzeugungsschaltung, um für die Übertragung in einem gegebenen Sendezeitschlitz Downlink-Steuerinformationen zu erzeugen, die eine oder mehrere Downlink-Datenzuweisungen identifizieren, und Uplink-Steuerinformationen, die eine oder mehrere aus der Kandidatenliste ausgewählte Uplink-Datenzuweisungen identifizieren, **dadurch gekennzeichnet, dass** die Steuerinformations-Erzeugungsschaltung so beschaffen ist, dass sie jede Uplink-Datenzuweisung aus der Kandidatenliste auswählt, um sicherzustellen, dass das Endgerät, das mit jeder ausgewählten Uplink-Datenzuweisung verbunden ist, in der Lage sein wird, die Uplink-Steuerinformationen zu empfangen, angesichts der drahtlosen Kommunikationsressourcen, die von der drahtlosen Kommunikationsschaltung während des gegebenen Sendezeitschlitzes verwendet werden sollen.

2. Basisstation nach Anspruch 1, die ferner eine Antennenschaltung umfasst, die von der drahtlosen Kommunikationsschaltung betrieben wird, um aus einem Satz verfügbarer Strahlen ausgewählte Strahlen bereitzustellen, wobei die drahtlosen Kommunikationsressourcen für jedes identifizierte Endgerät mindestens einen ausgewählten Strahl umfassen, der für die Kommunikation mit dem identifizierten Endgerät zu verwenden ist.

3. Basisstation nach Anspruch 2, wobei es sich bei den Strahlen im Strahlensatz um Richtstrahlen handelt und für einen bestimmten ausgewählten Strahl die Endgeräte, die diesen ausgewählten Strahl verwenden können, von den Standorten dieser Endgeräte abhängig sind.

4. Basisstation nach Anspruch 2 oder Anspruch 3, wobei die Basisstation gezwungen ist, eine definierte maximale Anzahl von Strahlen in dem gegebenen Zeitschlitz für die Übertragung nicht zu überschreiten.

5. Basisstation nach einem der Ansprüche 2 bis 4, wobei die drahtlose Kommunikationsschaltung in der Lage ist, die ausgewählten Strahlen zwischen jedem Sendezeitschlitz und zwischen jedem Empfangszeitschlitz zu wechseln.

6. Basisstation nach einem der vorhergehenden Ansprüche, wobei die drahtlosen Kommunikationsressourcen, die von der drahtlosen Kommunikationsschaltung während des gegebenen Sendezeitschlitzes zu verwenden sind, die drahtlosen Kommunikationsressourcen sind, die für jede Zuweisung von Downlink-Daten verwendet werden, die für diesen Sendezeitschlitz bestimmt ist.

7. Basisstation nach einem der vorhergehenden Ansprüche, wobei die eine oder mehreren durch die Downlink-Steuerinformation identifizierten Downlink-Datenzuweisung jede Downlink-Datenzuweisung für den gegebenen Sendezeitschlitz umfassen, und die eine oder mehreren durch die Uplink-Steuerinformation identifizierten Uplink-Datenzuweisungen sich auf einen oder mehrere zukünftige Empfangszeitschlitze beziehen, die nach dem gegebenen Sendezeitschlitz auftreten.

8. Basisstation nach einem der vorhergehenden Ansprüche, wobei die Sendezeitschlitze und Empfangszeitschlitze in Rahmen organisiert sind, wobei jeder Rahmen mehrere Sendezeitschlitze und einen oder mehrere Empfangszeitschlitze umfasst.

9. Basisstation nach Anspruch 8, wobei die Uplink-Planungsschaltung so eingerichtet ist, dass sie die Kandidatenliste der Uplink-Datenzuweisungen für jeden Empfangszeitschlitz eines gegebenen Rahmens berechnet, bevor die Downlink-Planungsschaltung die Downlink-Datenzuweisungen für jeden Sendezeitschlitz des gegebenen Rahmens berechnet.

10. Basisstation nach Anspruch 9, wobei die Uplink-Planungsschaltung so eingerichtet ist, dass sie die Kandidatenliste der Uplink-Datenzuweisungen entweder sequentiell für jeden Empfangszeitschlitz des gegebenen Rahmens oder für alle Empfangszeitschlitze des gegebenen Rahmens parallel berechnet.

11. Basisstation nach einem der Ansprüche 8 bis 10, wobei die Downlink-Planungsschaltung so eingerichtet ist, dass sie eine separate Planungsoperation für jeden Sendezeitschlitz des Rahmens durchführt, um die ein oder mehreren Downlink-Datenzuweisungen für diesen Sendezeitschlitz zu bestimmen.

12. Basisstation nach einem der Ansprüche 8 bis 11, wobei die Uplink-Planungsschaltung so eingerichtet ist, dass sie eine Planungsoperation einmal pro Rahmen durchführt, so dass die Kandidatenliste von Uplink-Datenzuweisungen für jeden Empfangszeitschlitz für jeden Rahmen neu berechnet wird.

13. Basisstation nach einem der Ansprüche 8 bis 12, wobei jeder Rahmen eine Sequenz von Sendezeitschlitzen umfasst, die einer Sequenz von Empfangszeitschlitzen vorausgeht.

14. Basisstation nach einem der vorhergehenden Ansprüche, wobei:

die drahtlosen Kommunikationsressourcen einen oder mehrere Strahlen identifizieren, die für die Kommunikation verwendet werden sollen; und

die Steuerinformations-Erzeugungsschaltung so eingerichtet ist, dass sie für jede von der Downlink-Planungsschaltung für den gegebenen Sendezeitschlitz bestimmte Downlink-Datenzuweisung den durch die drahtlosen Kommunikationsressourcen dieser Downlink-Datenzuweisung angegebenen Strahl auswählt, falls verfügbar, eine oder mehrere Uplink-Datenzuweisungen in der Kandidatenliste auswählt, die ebenfalls den für diese Downlink-Datenzuweisung angegebenen Strahl verwenden, und die Uplink-Steuerinformationen für die Übertragung in dem gegebenen Sendezeitschlitz erzeugt, um jede ausgewählte Uplink-Datenzuweisung zu identifizieren.

15. Verfahren zum Betreiben einer Basisstation zur drahtlosen Kommunikation mit einer Vielzahl von Endgeräten, Folgendes umfassend:

während der für die Übertragung zugewiesenen Zeitschlitze, Übertragen von Downlink-Daten zum Empfang durch ein oder mehrere Endgeräte;
während der für den Empfang zugewiesenen Zeitschlitze, Empfangen von Uplink-Daten, die von einem oder mehreren der Endgeräte übertragen werden;
Bestimmen für jeden Sendezeitschlitz, unter Verwendung einer Downlink-Planungsschaltung, einer oder mehrerer Downlink-Datenzuweisungen, wobei jede Downlink-Datenzuweisung ein Endgerät identifiziert, an das Downlink-Daten zu übertragen sind, und drahtlose Kommunikationsressourcen, die während des Sendezeitschlitzes zu verwenden sind, um die Downlink-Daten an das identifizierte Endgerät zu übertragen;
Bestimmen, unter Verwendung einer Uplink-Planungsschaltung, die vor der Downlink-Planungsschaltung arbeitet, einer Kandidatenliste von Uplink-Datenzuweisungen, die für einen oder mehrere Empfangszeitschlitze im Anschluss an einen aktuellen Sendezeitschlitz, der von der Downlink-Planungsschaltung berücksichtigt wird, Endgeräte identifiziert, die zugewiesen werden können, um Uplink-Daten innerhalb des einen oder der mehreren Empfangszeitschlitze zu übertragen, und, für jedes identifizierte Endgerät, die drahtlosen Kommunikationsressourcen, die für dieses identifizierte Endgerät zu verwenden sind; und
Erzeugen, für die Übertragung in einem gegebenen Sendezeitschlitz, von Downlink-Steuerinformationen, die eine oder mehrere Downlink-Datenzuweisungen identifizieren, und von Uplink-Steuerinformationen, die eine oder mehrere aus der Kandidatenliste ausgewählte Uplink-Datenzuweisungen identifizieren, **dadurch gekennzeichnet, dass** jede Uplink-Datenzuweisung aus der Kandidatenliste so ausgewählt wird, dass versucht wird, sicherzustellen, dass das Endgerät, das mit jeder ausgewählten Uplink-Datenzuweisung verbunden ist, in der Lage sein wird, die Uplink-Steuerinformationen zu empfangen, angesichts der drahtlosen Kommunikationsressourcen, die während des gegebenen Sendezeitschlitzes verwendet werden sollen.

## Revendications

1. Station de base pour la communication sans fil avec une pluralité de terminaux, comprenant :

des circuits de communication sans fil configurés, pendant les intervalles de temps de transmission alloués à la transmission, pour transmettre des données de liaison descendante destinées à être reçues par un ou plusieurs terminaux, et configurés en outre, pendant les intervalles de temps de réception alloués à la réception, pour recevoir des données de liaison montante transmises par un ou plusieurs terminaux ;
des circuits de programmation de liaison descendante configurés pour déterminer, pour chaque intervalle de temps de transmission, une ou plusieurs allocations de données de liaison descendante, chaque allocation de données de liaison descendante identifiant un terminal auquel des données de liaison descendante doivent être transmises, et des ressources de communication sans fil à utiliser par les circuits de communication sans fil pendant l'intervalle de temps de transmission pour transmettre les données de liaison descendante au terminal identifié ;
des circuits de programmation de liaison montante configuré pour fonctionner avant les circuits de programmation de liaison descendante afin de déterminer une liste candidate d'allocations de données de liaison montante identifiant, pour un ou plusieurs intervalles de temps de réception postérieurs à un intervalle de temps de transmission courant pris en compte par les circuits de programmation de liaison descendante, les terminaux qui peuvent être alloués pour transmettre des données de liaison montante dans les un ou plusieurs intervalles de temps de réception et, pour chaque terminal identifié, les ressources de communication sans fil devant être utilisées pour ce terminal identifié ; et des circuits de génération d'informations de commande pour générer, en vue d'une transmission dans un intervalle de temps de transmission donné, des informations de commande de liaison descendante identifiant une ou plusieurs allocations de données de liaison descendante, et des informations de commande de liaison montante identifiant une ou plusieurs allocations de données de liaison montante sélectionnées dans la liste des candidats, **caractérisés en ce que** les circuits de génération d'informations de commande sont conçus pour sélectionner chaque allocation de données de liaison montante dans la liste des candidats de manière à s'assurer que le terminal associé à chaque allocation de données de liaison montante sélectionnée sera en mesure de recevoir les informations de commande de liaison montante, compte tenu des ressources de communication sans fil à utiliser par les circuits de communication sans fil au cours de l'intervalle de temps de transmission donné.

2. Station de base telle que revendiquée dans la revendication 1, comprenant en outre des circuits d'antenne exploités par les circuits de communication sans fil pour fournir des faisceaux sélectionnés parmi un ensemble de faisceaux disponibles et, pour chaque terminal identifié, les ressources de communication sans fil comprennent au moins un faisceau sélectionné à utiliser pour la communication avec le terminal identifié.

3. Station de base telle que revendiquée dans la revendication 2, dans laquelle les faisceaux de l'ensemble de faisceaux sont des faisceaux directionnels et, pour tout faisceau sélectionné particulier, les terminaux capables d'utiliser ce faisceau sélectionné dépendront de l'emplacement de ces terminaux.

4. Station de base telle que revendiquée dans la revendication 2 ou la revendication 3, dans laquelle la station de base est contrainte de ne pas dépasser un nombre maximal défini de faisceaux dans l'intervalle de temps de transmission donné.

5. Station de base telle que revendiquée dans l'une quelconque des revendications 2 à 4, dans laquelle les circuits de communication sans fil peuvent modifier les faisceaux sélectionnés entre chaque intervalle de temps de transmission et entre chaque intervalle de temps de réception.

6. Station de base telle que revendiquée dans l'une quelconque des revendications précédentes, dans laquelle les ressources de communication sans fil à employer par les circuits de communication sans fil pendant l'intervalle de temps de transmission donné sont les ressources de communication sans fil utilisées pour chaque allocation de données de liaison descendante déterminée pour cet intervalle de temps de transmission.

7. Station de base telle que revendiquée dans l'une quelconque des revendications précédentes, dans laquelle les une ou plusieurs allocations de données de liaison descendante identifiées par les informations de commande de liaison descendante comprennent chaque allocation de données de liaison descendante pour l'intervalle temporel de transmission donné, et les une ou plusieurs allocations de données de liaison montante identifiées par les informations de commande de liaison montante concernent un ou plusieurs intervalles temporels de réception futurs survenant après le créneau temporel de transmission donné.

8. Station de base telle que revendiquée dans l'une quelconque des revendications précédentes, dans laquelle les intervalles de temps de transmission et les intervalles de temps de réception sont organisés en trames, chaque trame comprenant plusieurs intervalles de temps de transmission et un ou plusieurs intervalles de temps de réception.

9. Station de base telle que revendiquée dans la revendication 8, dans laquelle les circuits de programmation de liaison montante sont conçus pour calculer la liste de candidats d'allocations de données de liaison montante pour chaque intervalle de temps de réception d'une trame donnée avant que le circuit de programmation de liaison descendante ne calcule les allocations de données de liaison descendante pour tout intervalle de temps de transmission de la trame donnée.

10. Station de base telle que revendiquée dans la revendication 9, dans laquelle les circuits de programmation de liaison montante sont conçus pour calculer la liste de candidats d'allocations de données de liaison montante soit séquentiellement pour chaque intervalle de temps de réception de la trame donnée, soit en parallèle pour tous les intervalles de temps de réception de la trame donnée.

11. Station de base telle que revendiquée dans l'une quelconque des revendications 8 à 10, dans laquelle les circuits de programmation de liaison descendante sont conçus pour effectuer une opération de programmation distincte pour chaque intervalle de temps de transmission de la trame afin de déterminer les une ou plusieurs allocations de données de liaison descendante pour cet intervalle de temps de transmission.

**12.** Station de base telle que revendiquée dans l'une quelconque des revendications 8 à 11, dans laquelle les circuits de programmation de liaison montante sont conçus pour effectuer une opération de programmation une fois par trame, de sorte que la liste de candidats d'allocations de données de liaison montante pour chaque intervalle de temps de réception est recalculée pour chaque trame.

**13.** Station de base telle que revendiquée dans l'une quelconque des revendications 8 à 12, dans laquelle chaque trame comprend une séquence d'intervalles de temps de transmission précédant une séquence d'intervalles de temps de réception.

**14.** Station de base telle que revendiquée dans l'une quelconque des revendications précédentes, dans laquelle :

les ressources de communication sans fil identifient un ou plusieurs faisceaux à utiliser pour la communication ; et
les circuits de génération d'informations de commande sont conçus, pour chaque allocation de données de liaison descendante déterminée par les circuits de programmation de liaison descendante pour l'intervalle de temps de transmission donné, pour identifier le faisceau spécifié par les ressources de communication sans fil de cette allocation de données de liaison descendante, pour sélectionner, le cas échéant, une ou plusieurs allocations de données de liaison montante dans la liste de candidats qui utilisent également le faisceau identifié pour cette allocation de données de liaison descendante, et pour générer les informations de commande de liaison montante pour la transmission dans l'intervalle de temps de transmission donné de manière à identifier chaque allocation de données de liaison montante sélectionnée.

**15.** Procédé d'exploitation d'une station de base pour la communication sans fil avec une pluralité de terminaux, le procédé comprenant les étapes suivantes :

pendant les intervalles de temps de transmission alloués à la transmission, transmettre des données de liaison descendante pour réception par un ou plusieurs terminaux ;
pendant les intervalles de temps de réception alloués à la réception, recevoir des données de liaison montante transmises par un ou plusieurs des terminaux ;
déterminer, pour chaque intervalle de temps de transmission, à l'aide des circuits de programmation de liaison descendante, une ou plusieurs allocations de données de liaison descendante, chaque allocation de données de liaison descendante identifiant un terminal auquel des données de liaison descendante doivent être transmises, et les ressources de communication sans fil à utiliser pendant l'intervalle de temps de transmission pour transmettre les données de liaison descendante au terminal identifié ;
déterminer, à l'aide des circuits de programmation de liaison montante fonctionnant avant les circuits de programmation de liaison descendante, une liste de candidats d'allocations de données de liaison montante identifiant, pour un ou plusieurs intervalles de temps de réception postérieurs à un intervalle de temps de transmission courant pris en compte par les circuits de programmation de liaison descendante, les terminaux qui peuvent être alloués à la transmission de données de liaison montante dans l'intervalle de temps de réception et, pour chaque terminal identifié, les ressources de communication sans fil à utiliser pour ce terminal identifié ; et
générer, pour une transmission dans un intervalle de temps de transmission donné, des informations de commande de liaison descendante identifiant une ou plusieurs allocations de données de liaison descendante, et des informations de commande de liaison montante identifiant une ou plusieurs allocations de données de liaison montante sélectionnées dans la liste de candidats, **caractérisé en ce que** chaque allocation de données de liaison montante est sélectionnée dans la liste de candidats de manière à garantir que le terminal associé à chaque allocation de données de liaison montante sélectionnée sera en mesure de recevoir les informations de commande de liaison montante, compte tenu des ressources de communication sans fil à utiliser au cours de l'intervalle de temps de transmission donné.

100

102

ANTENNA
ARRAY

104

WIRELESS
COMMUNICATION
CIRCUITRY

106

DOWNLINK
SCHEDULING
CIRCUITRY

110

CONTROL
INFORMATION
GENERATION
CIRCUITRY

108

UPLINK
SCHEDULING
CIRCUITRY

FIG. 1

FIG. 2

FIG. 3

FIG. 4

START — 450

INITIALISE
FRAME NUMBER F TO 0
SLOT NUMBER S TO -1 — 452

454

IF S >= MAX
SLOTS PER
FRAME ?

NO

YES

S = S + 1 — 458

F = F + 1
S = 0 — 456

460

IS S + N
A DL SLOT ?

NO

YES

DL SCHEDULING
PREPARATION

UPDATE UE DL
PRIORITY LIST — 464

462

POP HIGHEST
PRIORITY DL UE — 466

468

ALL UEs
CONSIDERED ?

YES

476

UL SCHEDULING
PREPARATION

478

COMPUTE UCI

(S+M)

(S+N)

(S+M)

430

CANDIDATE
UL DATA
ALLOCATIONS

FIG. 5

FIG. 5 (continued)

FIG. 6

| Current time | DL Data Allocation PDSCH | DL Control Allocation DCI | Candidate UL Data Allocation PUSCH | UL Control Allocation UCI |
|---|---|---|---|---|
| F100, S2 | | | F101, S7 | |
| F100, S3 | | | F101, S8 | |
| F100, S4 | | | F101, S9 | |
| F100, S5 | F101, S0 | F101, S0 | | F101, S0 |
| F100, S6 | F101, S1 | F101, S1 | | F101, S1 |
| F100, S7 | F101, S2 | F101, S2 | | F101, S2 |
| F100, S8 | F101, S3 | F101, S3 | | F101, S3 |
| F100, S9 | F101, S4 | F101, S4 | | F101, S4 |
| F101, S0 | F101, S5 | F101, S5 | | F101, S5 |
| F101, S1 | | | | F101, S6 |
| F101, S2 | | | F102, S7 | |
| F101, S3 | | | F102, S8 | |
| F101, S4 | | | F102, S9 | |
| F101, S5 | F102, S0 | F102, S0 | | F102, S0 |
| F101, S6 | F102, S1 | F102, S1 | | F102, S1 |
| F101, S7 | F102, S2 | F102, S2 | | F102, S2 |
| F101, S8 | F102, S3 | F102, S3 | | F102, S3 |
| F101, S9 | F102, S4 | F102, S4 | | F102, S4 |

FIG. 7

27

DL Data Allocation — PDSCH
DL Control Allocation — DCI
Candidate UL Data Allocation — PUSCH
UL Control Allocation — UCI

Current time

FIG. 8

Allocations vs Time. 30 UL users.

RESOURCES FAIRLY DISTRIBUTED

Cumulative Allocations (# RBGs)

Time

FIG. 9

Beams for UL data. Slot: 7

Beams for UL data. Slot: 8

Beams for UL data. Slot: 9

FIG. 10

Beams for DL data and control. Slot: 0

Beams for DL data and control. Slot: 1

Beams for DL data and control. Slot: 2

Beams for DL data and control. Slot: 3

Beams for DL data and control. Slot: 4

Beams for DL data and control. Slot: 5

FIG. 11

Beams for DL data and control. Slot: 0

(2,4) (4,10) (7,15) (8,24)
(2,[8]) (4,[9]) (5,[7]) (8,[9]) (10,30)
(6,[8]) (10,[8])
(7,[9])

Beams for DL data and control. Slot: 1

(1,2) (3,8) (6,15) (9,26)
(1,[7]) (3,[7]) (9,[7])

Beams for DL data and control. Slot: 2

(2,4) (4,10) (5,15) (8,24)
(10,30)
(10,[7])

Beams for DL data and control. Slot: 3

(1,2) (3,8) (7,15) (9,26)
(3,[6]) (9,[6])

Beams for DL data and control. Slot: 4

(2,4) (4,10) (6,15) (8,24)
(10,30)

Beams for DL data and control. Slot: 5

(1,2) (3,8) (5,15) (9,26)

## FIG. 12

EP 4 213 572 B1

**PDSCH**

| Slot 0 | | Slot 1 | | Slot 2 | | Slot 3 | | Slot 4 | | Slot 5 | | Slot 6 |
|---|---|---|---|---|---|---|---|---|---|---|---|---|
| UE ID | Beam Idx | UE ID | Beam Idx | UE ID | Beam Idx | UE ID | Beam Idx | UE ID | Beam Idx | UE ID | Beam Idx | |
| 10 | 30 | 9 | 26 | 5 | 15 | 7 | 15 | 6 | 15 | 5 | 15 | |
| 7 | 15 | 6 | 15 | 10 | 30 | 9 | 26 | 10 | 30 | 9 | 26 | |
| 8 | 24 | 3 | 8 | 8 | 24 | 3 | 8 | 8 | 24 | 3 | 8 | |
| 4 | 10 | 1 | 2 | 4 | 10 | 1 | 2 | 4 | 10 | 1 | 2 | |
| 2 | 4 | | | 2 | 4 | | | 2 | 4 | | | |

**PUSCH**

| Slot 7 | | Slot 8 | | Slot 9 | |
|---|---|---|---|---|---|
| UE ID | Beam Idx | UE ID | Beam Idx | UE ID | Beam Idx |
| 5 | 15 | 6 | 15 | 7 | 15 |
| 1 | 2 | 4 | 10 | 4 | 10 |
| 2 | 4 | 8 | 24 | 8 | 24 |
| 3 | 8 | 9 | 26 | 9 | 26 |
| | | 9 | 26 | 3 | 8 |
| | | 10 | 30 | 10 | 30 |

**DL DCI**

| Slot 0 | | Slot 1 | | Slot 2 | | Slot 3 | | Slot 4 | | Slot 5 | |
|---|---|---|---|---|---|---|---|---|---|---|---|
| UE (k0) | Beam Idx | UE ID | Beam Idx | UE ID | Beam Idx | UE ID | Beam Idx | UE ID | Beam Idx | UE ID | Beam Idx |
| 10 (0) | 30 | 9 (0) | 26 | 5 (0) | 15 | 7 (0) | 15 | | 15 | 5 (0) | 15 |
| 7 (0) | 15 | 6 (0) | 15 | 10 (0) | 30 | 9 (0) | | 10 (0) | 30 | | 26 |
| 8 (0) | 24 | 3 (0) | 8 | 8 (0) | 24 | 3 (0) | | 8 (0) | | 3 (0) | 8 |
| 4 (0) | 10 | 1 (0) | 2 | 4 (0) | 10 | | 2 | 4 (0) | 10 | 1 (0) | 2 |
| 2 (0) | 4 | | | 2 (0) | | | | | 4 | | |

**UL DCI**

| Slot 0 | | Slot 1 | | Slot 2 | | Slot 3 | | Slot 4 | | Slot 5 | | Slot 6 | |
|---|---|---|---|---|---|---|---|---|---|---|---|---|---|
| UE (k2) | Beam Idx | UE ID | Beam Idx | UE ID | Beam Idx | UE ID | Beam Idx | UE ID | Beam Idx | UE ID | Beam Idx | UE ID | Beam Idx |
| 10 (8) | 30 | 9 (7) | 26 | 10 (7) | 30 | 9 (6) | 26 | | | | | | |
| 5 (7) | 15 | 3 (7) | 8 | | | 3 (6) | 8 | | | | | | |
| 6 (8) | 15 | 1 (7) | 2 | | | | | | | | | | |
| 7 (9) | 15 | | | | | | | | | | | | |
| 8 (9) | 24 | | | | | | | | | | | | |
| 4 (9) | 10 | | | | | | | | | | | | |
| 2 (8) | 4 | | | | | | | | | | | | |

UE 5, transmit 7 slots from now (slot:0+7=7), BS to use beam 15 for reception

UE 1, transmit 7 slots from now (slot:1+7=8), BS to use beam 2 for reception

UE 3, transmit 6 slots from now (slot:3+6=9), BS to use beam 8 for reception

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020106549 A1, BAGHERI HOSSEIN
- US 2017318565 A1, GOLITSCHEK EDLER VON EL-BWART ALEXANDER
- WO 2021231522 A1, YI YUNJUNG [US]; DINAN ES-MAEL HEJAZI
- WO 2021253207 A1, CHEN BO